# EUROPEAN PATENT SPECIFICATION

(11) **EP 2 227 044 B1**
(45) Date of publication and mention of the grant of the patent: **11.06.2014**
(21) Application number: 09702100.0
(22) Date of filing: 09.01.2009
(51) Int. Cl.: H04W 4/14, H04L 12/58

(54) **METHOD, NETWORK ELEMENT EQUIPMENT AND NETWORK SYSTEM FOR INSTANT MESSAGE DELIVERY STATUS NOTIFICATION**
VERFAHREN, NETZWERKELEMENT-AUSRÜSTUNG UND NETZWERKSYSTEM FÜR DIE BENACHRICHTIGUNG DES ZUSTELLUNGSSTATUS VON SOFORTNACHRICHTEN
PROCÉDÉ, ÉQUIPEMENT D'ÉLÉMENTS DE RÉSEAU ET SYSTÈME RÉSEAU POUR LA NOTIFICATION D'ÉTAT DE DISTRIBUTION DE MESSAGE INSTANTANÉ

(30) Priority: 09.01.2008 CN 200810002711; 11.06.2008 CN 200810109685
(43) Date of publication of application: 08.09.2010
(73) Proprietor: Huawei Technologies Co., Ltd., Longgang District, Shenzhen Guangdong 518129 (CN)
(72) Inventor: ZHANG, Ying, Guangdong 518129 (CN); WANG, Xiao, Guangdong 518129 (CN)
(74) Representative: Thun, Clemens
(86) International application number: PCT/CN2009/070090
(87) International publication number: WO 2009/089793

(56) References cited:
- EP-A1- 1 798 933
- WO-A1-2006/081549
- CN-A- 1 558 689
- "3rd Generation Partnership Project; Technical Specification Group Services and System Aspects; Support of Short Message Service (SMS) over generic 3GPP Internet Protocol (IP) access; Stage 2 (Release 8)", 3GPP STANDARD; 3GPP TS 23.204, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2007 (2007-12-01), pages 1-30, XP050363055,
- BURGER BEA SYSTEMS E ET AL: "Instant Message Disposition Notification; draft-ietf-simple-imdn-04.txt", IETF STANDARD-WORKING-DRAFT, INTERNET ENGINEERING TASK FORCE, IETF, CH, vol. simple, no. 4, 15 May 2007 (2007-05-15), XP015049825, ISSN: 0000-0004
- "3rd Generation Partnership Project; Technical Specification Group Core Network and Terminals; Technical realization of the Short Message Service (SMS) (Release 8)", 3GPP STANDARD; 3GPP TS 23.040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2007 (2007-12-01), pages 1-199, XP050362157,
- '3GPP TR 23.811 V1 .0.0 Service Level Interworking for Messaging Services; Stage 2 (Release 8)', [Online] 11 December 2007, Retrieved from the Internet: <URL:http://www.3gpp.org/ftp/specs/html-inf o/23811.htm>
- '3GPP TS 23.040 V6.5.0 Technical realization of the Short Message Service (SMS) (Release 6)', [Online] 23 September 2004, Retrieved from the Internet: <URL:http://www.3gpp.org/ftp/specs/html-inf o/23040.htm>
- E. BURGER ET AL.: 'Instant Message Disposition Notification draft-ietf simple-imdn-04', [Online] 15 May 2007, Retrieved from the Internet: <URL:https://wiki.tools.iet org/wg/simple/d raft-ietf simple-imdn>

## Description

### FIELD OF THE TECHNOLOGY

The present invention relates to the field of communications technologies, and more particularly to a method, network element equipment, and a network system for instant message delivery status notification.

### BACKGROUND OF THE INVENTION

Short Message Service (SMS) is defined by the 3GPP for satisfying the requirements of sending/receiving short messages in a CS/PS domain. The SMS mainly delivers the message content in a text format. Instant Message (IM) is a Session Initiation Protocol (SIP)-based instant message service defined by the 3GPP, the Internet Engineering Task Force (IETF), and the Open Mobile Alliance (OMA), which is mainly applied in an IP field for satisfying the requirements of sending/receiving messages in the IP field. The IM may deliver messages in multimedia message formats such as audio, image, video, and text.

In order to realize the interworking between the IM message and the SMS message, the 3GPP defines a message service-level interworking (MESSIW) service, which transforms the message format at a network side without extending the terminal capability of the existing user equipment (UE). For example, when an IMS user and a CS/PS-domain user send messages to each other, the message, sent by the IMS user, in the IM message format is transformed at the network side into the SMS message format supported by the CS/PS-domain user and then sent to the CS/PS-domain user, and the message, sent by the CS/PS-domain user, in the SMS message format is transformed into the IM message format supported by the IMS user and then sent to the IMS user.

In the prior art, when the IMS user serving as a calling party needs to send an IM message to the CS/PS-domain user serving as a called party over the network, an IP Short Message Gateway (IP-SM-GW) receives the IM message sent by the calling party, and transforms the IM message into an SMS-SUBMIT message in an SMS format, and is then sent to an SMS Service Center (SMS-SC). Then, the SMS-SC forwards the received SMS-SUBMIT message to the called party in an SMS-DELIVER format, and generates an SMS-STATUS-REPORT according to the receiving situation of the called party, and then sends the SMS-STATUS-REPORT to the IP-SM-GW. The IP-SM-GW generates a Notification according to the SMS-STATUS-REPORT, but does not match the notification to a specific IM message. Therefore, the calling party fails to acquire whether the CS/PS-domain user serving as the called party has received the sent IM message.

Standard 3GPP TS 23.204 " Technical Specification Group Services and System Aspects; Support of Short Message Service over generic 3GPP Internet Protocol access" is a close prior art. It relates to a status report procedure for instant message to SMS message interworking.

IETF STANDARAD-WORKING-DRAFT, XP015049825 "Instant Message Disposition Notification" is a close prior art. It relates to the transfer of messages between users in real-time, and provides a mechanism whereby endpoints can request Instant Message Disposition Notifications (IMDN), including delivery, processing and read notifications, for page-mode instant message.

Standard 3GPP TS 23.040 "Technical Specification Group Core Network and Terminals; Technical realization of the Short Message Service" is a close prior art. It relates to the technical realization of the short message service (SMS).

Patent EP 1798 933A1 "A method of realizing message service based on IP network multimedia subsystem" is a close prior art. It relates to a method for implementing a message service based on IP Multimedia Subsystem (IMS).

### SUMMARY OF THE INVENTION

In view of the aforementioned technical problem, the present invention is directed to a method, network element equipment, and a network system for instant message delivery status notification, which enable a calling party to acquire whether a called party has received an IM message sent by the calling party.

Accordingly, the embodiments of the present invention provide the following technical solutions.

A method for instant message delivery status notification is provided, which includes the following steps.

An IM message which is sent by a calling party and carries an IM identifier is received, and the IM message is transformed into an SMS message which is then sent to an SMS-SC.

A time stamp of the SMS message is sent by the SMS-SC;

A corresponding relationship between the IM identifier and an SMS identifier corresponding to the SMS message is established, wherein the SMS identifier comprises the time stamp.

An SMS status report which is sent by the SMS-SC and carries a time stamp is received, the IM identifier corresponding to the SMS identifier is retrieved based on the established corresponding relationship between the IM identifier and the SMS identifier if the time stamp of the SMS status report is the same as the time stamp in the SMS identifier, and an IM delivery status notification message carrying the IM identifier is generated and then sent to the calling party.

A network element equipment is provided, which includes an IM message receiving unit, an SMS message sending unit, a time stamp receiving unit, a corresponding relationship establishing unit, an SMS status report receiving unit, an IM identifier retrieving unit, and an IM message delivery status notification unit.

The IM message receiving unit is configured to receive an IM message which is sent by a calling party and carries an IM identifier.

The SMS message sending unit is configured to transform the received IM message into an SMS message and send the SMS message to an SMS-SC.

The time stamp receiving unit is configured to receive a time stamp corresponding to the SMS message sent by the SMS-SC, wherein the time stamp corresponding to the SMS message is a time at which the SMS-SC receives the SMS message

The corresponding relationship establishing unit is configured to establish a corresponding relationship between the IM identifier and an SMS identifier corresponding to the SMS message, wherein the SMS identifier in the corresponding relationship establishing unit (504) comprises the time stamp corresponding to the SMS message.

The SMS status report receiving unit is configured to receive an SMS status report which is sent by the SMS-SC and carries the SMS identifier.

The IM identifier retrieving unit is configured to retrieve the IM identifier corresponding to the SMS identifier carried in the SMS status report based on the established corresponding relationship between the IM identifier and the SMS identifier, if the time stamp of the SMS status report is the same as the time stamp in the SMS identifier.

The IM message delivery status notification unit is configured to generate an IM delivery status notification message carrying the retrieved IM identifier and then send the IM delivery status notification message to the calling party.

A network system is provided, which includes an IP-SM-GW and an SMS-SC.

The IP-SM-GW is configured to receive an IM message which is sent by a calling party and carries an IM identifier, transform the IM message into an SMS message which is then sent to the SMS-SC, receive a time stamp corresponding to the SMS message sent by the SMS-SC, and the time stamp corresponding to the SMS message is a time at which the SMS-SC receives the SMS message, establish a corresponding relationship between the IM identifier and an SMS identifier corresponding to the SMS message, wherein the SMS identifier comprises the time stamp corresponding to the SMS message receive an SMS status report which is sent by the SMS-SC and carries a time stamp, retrieve the IM identifier corresponding to the SMS identifier carried in the SMS status report based on the established corresponding relationship between the IM identifier and the SMS identifier, if the time stamp of the SMS status report is the same as the time stamp in the SMS identifier, and generate an IM delivery status notification message carrying the retrieved IM identifier and send the IM delivery status notification message to the calling party.

The SMS-SC is configured to receive the SMS message sent by the IP-SM-GW, and send the SMS status report carrying the SMS identifier to the IP-SM-GW.

Any one of the above technical solutions has the following beneficial effects.

In the embodiments of the present invention, the corresponding relationship between the IM identifier and the SMS identifier for identifying the SMS message is established, and after the SMS status report which is sent by the SMS-SC and carries the SMS identifier is received, the IM identifier corresponding to the SMS identifier carried in the SMS status report is retrieved based on the established corresponding relationship between the IM identifier and the SMS identifier, and then the retrieved IM identifier is carried in the IM delivery status notification message and then sent to the calling party, so that the SMS message is mapped to the IM message, and thus the calling party is enabled to acquire whether the called party has received the IM message sent by the calling party.

### BRIEF DESCRIPTION OF THE DRAWINGS

FIG. 1 is a flow chart of a method for instant message delivery status notification according to a first embodiment of the present invention;
FIG. 2 is a flow chart of a method for instant message delivery status notification according to a second embodiment of the present invention;
FIG. 3 is a flow chart of a method for instant message delivery status notification according to a third embodiment of the present invention;
FIG. 4 is a flow chart of a method for instant message delivery status notification according to a fourth embodiment of the present invention;
FIG. 5 is a structural view of network element equipment according to a fifth embodiment of the present invention;
FIG. 6 is a structural view of network element equipment according to a sixth embodiment of the present invention;
FIG. 7 is a flow chart of a method for instant message delivery status notification according to a seventh embodiment of the present invention; and
FIG. 8 is a flow chart of a method for instant message delivery status notification according to an eighth embodiment of the present invention.

### DETAILED DESCRIPTION OF THE EMBODIMENTS

The embodiments of the present invention provide a method for instant message delivery status notification, which includes the following steps. An IM message which is sent by a calling party and carries an IM identifier is received, and the IM message is transformed into an SMS message and then sent to an SMS-SC. A corresponding relationship between the IM identifier and an SMS identifier for identifying the SMS message is established. An SMS status report which is sent by the SMS-SC and carries the SMS identifier is received. The IM identifier corresponding to the SMS identifier is retrieved based on the established corresponding relationship between the IM identifier and the SMS identifier. An IM delivery status notification message carrying the IM identifier is generated and then sent to the calling party.

The SMS identifier may be any one selected from a group including a TP service center time stamp (TP-SCTS), a calling party identifier, a TP-message reference (TP-MR), and an SMS-SC identifier, or any combination thereof, for example:
1. TP-SCTS;
2. calling party identifier and TP-SCTS field;
3. calling party identifier and TP-MESSAGE-REFERENCE (TP-MR);
4. calling party identifier, SMS-SC identifier, and TP-SCTS field;
5. calling party identifier, SMS-SC identifier, and TP-MR;
6. calling party identifier, TP-MR, and TP-SCTS field; and
7. calling party identifier, SMS-SC identifier, TP-MR, and TP-SCTS field.

The established corresponding relationship between the IM identifier and the SMS identifier for identifying the SMS message may be any one or a combination of the following circumstances.
1. A table of the corresponding relationship between the IM identifier and the SMS identifier is established.
2. The SMS identifier includes the IM identifier information.
3. By means of algorithms, the SMS identifier is generated according to the IM identifier, or the IM identifier is generated according to the SMS identifier.

The retrieving the IM identifier corresponding to the SMS identifier based on the established corresponding relationship between the IM identifier and the SMS identifier specifically includes any one or a combination of the following circumstances.
1. According to the SMS identifier, the IM identifier is looked up from the table of the corresponding relationship between the IM identifier and the SMS identifier.
2. Since the SMS identifier includes the IM identifier, the IM identifier is retrieved from the SMS identifier.
3. By means of algorithms, the IM identifier is generated according to the SMS identifier.

The SMS-SC identifier may be an address of an SMS-SC serving for the calling party or an address of an SMS-SC serving for the IP-SM-GW.

By adopting the technical solution provided in the embodiments of the present invention, the calling party is enabled to acquire whether the called party has received the IM message sent by the calling party.

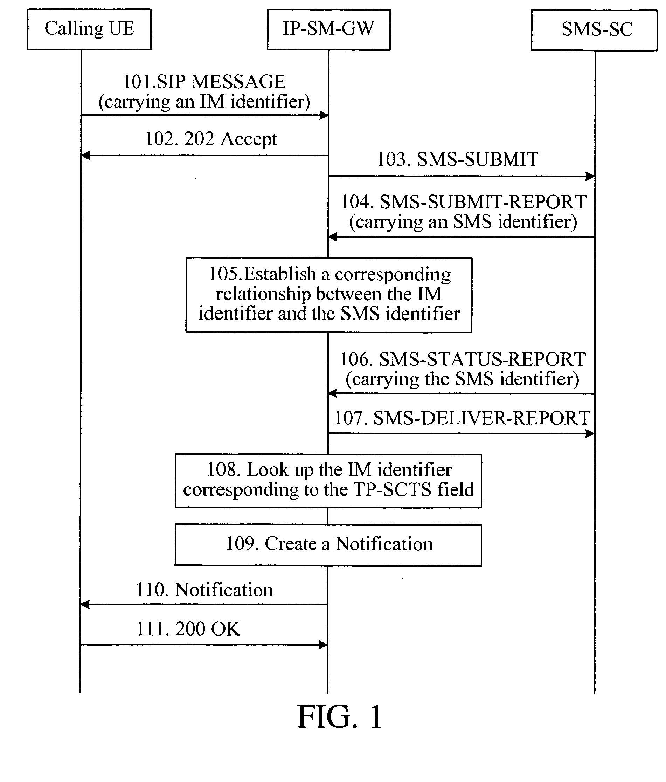

Referring to FIG. 1, in a first embodiment, the present invention provides a method for instant message delivery status notification. The IP-SM-GW establishes a corresponding relationship between the IM identifier and the SMS identifier. In this embodiment, the SMS identifier is a TP Service Centre Time tamp (TP-SCTS), i.e. the SMS-SC receives a time stamp of an SMS-SUBMIT message. The method specifically includes the following steps.

In step 101, a calling UE sends an SIP MESSAGE to the IP-SM-GW, where the SIP MESSAGE is an IM message, and carries an instant message disposition notification (IMDN) requirement and an IM identifier.

The IM identifier in this step includes an IM number, for example, imdn.Messaae-ID:34jk324j defined in the IMDN.

In step 102, the IP-SM-CTW returns a 202 Accept response message to the calling UE in response to the received SIP MESSAGE.

In step 103, the IP-SM-GW transforms the SIP MESSAGE into an SMS SUBMIT message in an SMS format and then sends the SMS SUBMIT message to the SMS-SC. The TP-STATUS-REPORT-REQUEST (TP-SRR) field in the SMS SUBMIT message is set as 1 to indicate that an SMS-STATUS-REPORT is required, and the IM identifier in the SIP MESSAGE is stored in an IM identifier item of the message identifier mapping table, as shown in Table 1.

**Table 1**

| **IM identifier** | **SMS identifer** |
|---|---|
| imdn.Message-ID:34jk324j | |

In step 104, the SMS-SC returns an SMS-SUBMIT-REPORT message in response to the received SMS-SUBMIT message. The TP-SCTS field in the message is: "70017121711080", which indicates that the SMS-SC receives the SMS-SUBMIT message at 12:17:01 on October 17, 2007, and that the SMS-SC is located in a time zone that is eight hours in advance of the Greenwich Mean Time, i.e. the SMC-SC is located within GMT+08 Time Zone.

In step 105, based on the corresponding relationship between the SMS-SUBMIT-REPORT message and the SMS-SUBMIT message, the IP-SM-GW takes the TP-SCTS field as the SMS identifier, associates the SMS identifier with the IM identifier carried in the received SIP MESSAGE, and establishes a corresponding relationship between the IM identifier and the TP-SCTS field, as shown in Table 2.

**Table 2**

| **IM identifier** | **SMS identifier** |
|---|---|
| imdn.Message-ID:34jk324j | TP-SCTS: 70017121711080 |

In step 106, the SMS-SC sends an SMS-STATUS-REPORT to the IP-SM-GW according to an actual situation whether a called UE has received the IM message, and the TP-SCTS field in the SMS-STATUS-REPORT is: "70017121711080".

In step 107, the IP-SM-GW returns an SMS-DELIVER-REPORT message to the SMS-SC in response to the received SMS-STATUS-REPORT message.

In step 108, the IP-SM-GW looks up the IM identifier corresponding to the TP-SCTS field from the message identifier mapping table, and maps the SMS-STATUS-REPORT to the SIP MESSAGE.

In step 109, according to the message content of the SMS-STATUS-REPORT and the IMDN requirement in the corresponding SIP MESSAGE, a Notification carrying the IM identifier is created to serve as an IM delivery status notification message. The IM identifier in this step may be carried in the Notification message body.

According to the message content of the SMS-STATUS-REPORT and the IMDN requirement in the corresponding SIP MESSAGE, the creating of the Notification is specifically realized as follows. The SMS-STATUS-REPORT carries status information indicating that the called party successfully receives the IM message or fails to receive the IM message, and the IMDN requires the called party send the IM delivery status notification message when the called party successfully receives the IM message or fails to receive the IM message. If the IMDN requires the called party send the IM delivery status notification message when the called party successfully receives the IM message, and the status information carried in the SMS-STATUS-REPORT indicates that the called party successfully receives the IM message, the Notification carrying the IM identifier is generated as the IM delivery status notification message, so as to inform the calling party that the sent IM message has been successfully received by the called party.

Of course, the calling party may also be informed when the called party fails to receive the IM message, and in this case, the IMDN requires the called party send the IM delivery status notification message when the called party fails to receive the IM message. In the above step, alternatively, the IM delivery status notification message is determined directly according to the message content of the SMS-STATUS-REPORT, and meanwhile the IMDN requires the called party send the IM delivery status notification message in both circumstances that the called party successfully receives the IM message or the called party fails to receive the IM message. If the status information carried in the SMS-STATUS-REPORT indicates that the called party successfully receives the IM message, the IM delivery status notification message indicating that the called party successfully receives the IM message is sent to the calling party; or if the status information carried in the SMS-STATUS-REPORT indicates that the called party fails to receive the IM message, the IM delivery status notification message indicating that the called party fails to receive the IM message is sent to the calling party. In this way, the objective of the present invention is realized.

In step 110, the IP-SM-GW sends the Notification to the calling UE.

In step 111, the calling UE returns a 200 OK response message, in response to the received Notification.

In the first embodiment of the present invention, the corresponding relationship between the IM identifier and the TP-SCTS is established, and after the SMS status report carrying the TP-SCTS field sent by the SMS-SC is received, the IM identifier corresponding to the TP-SCTS field carried in the SMS status report is retrieved based on the established corresponding relationship between the IM identifier and the TP-SCTS, and the retrieved IM identifier is carried in the IM delivery status notification message and sent to the calling party, so that the SMS message is mapped to the IM message, and thus the calling party is enabled to acquire whether the called party has received the IM message sent by the calling party.

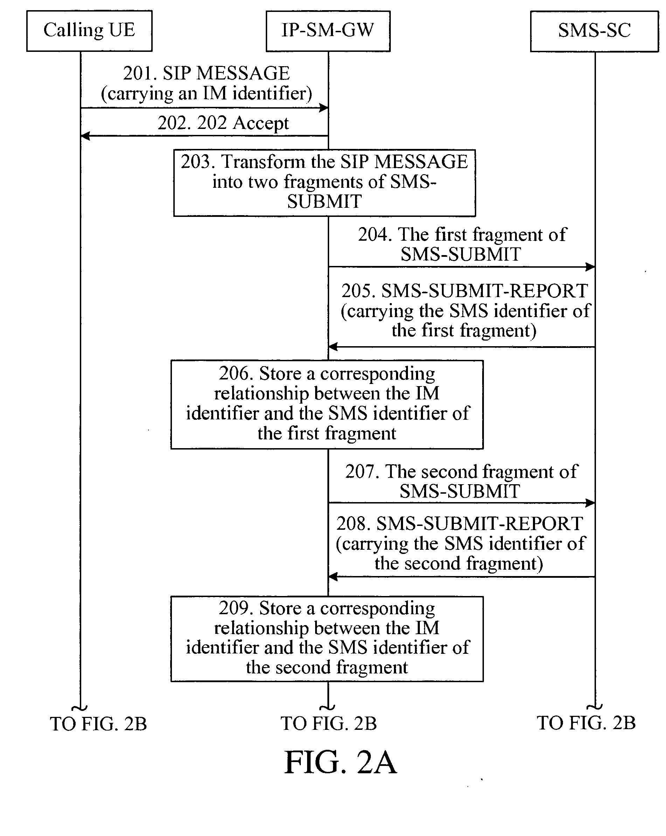

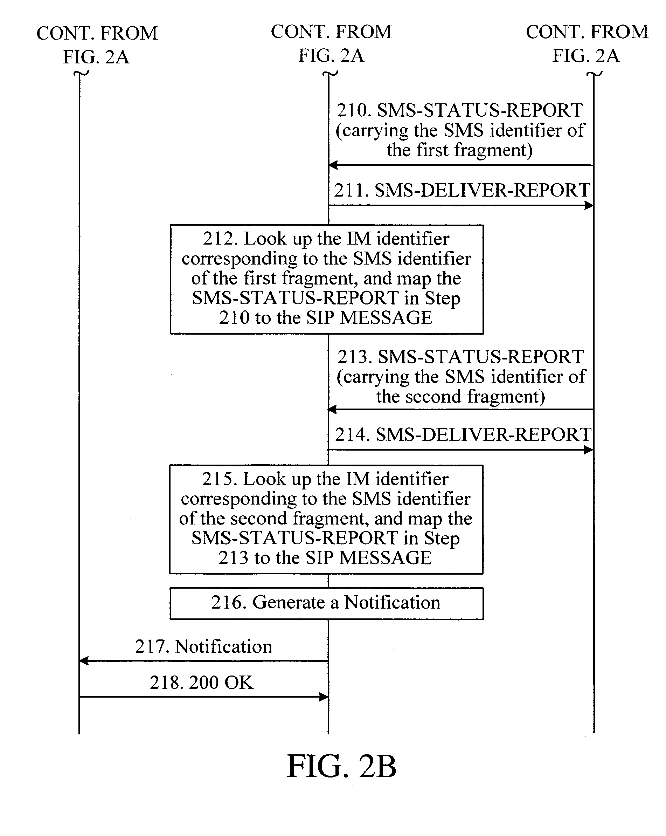

Referring to FIG. 2, in a second embodiment, the present invention provides a method for instant message delivery status notification. In this method, the message content of an SIP MESSAGE exceeds a bearer capability of a single SMS message, so that the SIP MESSAGE is transformed into a plurality of fragments of SMS SUBMIT messages and then transmitted, e.g. transformed into two fragments of SMS SUBMIT messages and then transmitted. The IP-SM-GW establishes the corresponding relationship between the IM identifier and the SMS identifier. In this embodiment, the SMS identifier is two TP-SCTS fields, respectively indicating the time stamps about time when the SMS-SC receives the two fragments of SMS-SUBMIT messages. The method specifically includes the following steps.

Steps 201 to 202 are the same as steps 101 to 102 in the first embodiment.

In step 203, since the message content of the SIP MESSAGE exceeds the bearer capability of a single SMS message, the SIP MESSAGE is transformed into two fragments of SMS-SUBMIT messages, where the TP-SRR field in each fragment of SMS-SUBMIT message is set as 1 to indicate that a corresponding SMS-STATUS-REPORT is required, and the IM identifier in the SIP MESSAGE is stored in the IM identifier item of the message identifier mapping table as shown in Table 3.

**Table 3**

| **IM identifier** | **SMS identifier** |
|---|---|
| imdn.Message-ID:34jk324j | |
| imdn.Message-ID:34jk324j | |

In step 204, the IP-SM-GW sends the first fragment of SMS-SUBMIT message to the SMS-SC.

In step 205, the SMS-SC returns an SMS-SUBMIT-REPORT message to the IP-SM-GW in response to the received first fragment of SMS-SUBMIT message. The TP-SCTS field in the SMS-SUBMIT-REPORT message is: "70017121711080", which indicates that the SMS-SC receives the first fragment of SMS-SUBMIT message at 12:17:01 on October 17, 2007, and that the SMS-SC is located within GMT+08 Time Zone.

In step 206, the IP-SM-GW takes the TP-SCTS field in step 205 as the SMS identifier of the first fragment, associates the SMS identifier with the IM identifier carried in the received SIP MESSAGE, and stores the SMS identifier in an SMS identifier item of the message identifier mapping table, as shown in Table 4, so as to store the corresponding relationship between the IM identifier and the SMS identifier of the first fragment.

**Table 4**

| **IM identifier** | **SMS identifier** |
|---|---|
| imdn.Message-ID:34jk324j | TP-SCTS: 70017121711080 |
| imdn.Message-ID:34jk324j | |

In step 207, the IP-SM-GW sends the second fragment of SMS-SUBMIT message to the SMS-SC.

In step 208, the SMS-SC returns an SMS-SUBMIT-REPORT message to the IP-SM-GW in response to the received second fragment of SMS-SUBMIT message. The TP-SCTS field in the SMS-SUBMIT-REPORT message is "70017121715480", which indicates that the SMS-SC receives the second fragment of SMS-SUBMIT message at 12:17:45 on October 17, 2007, and that the SMS-SC is located within GMT+08 Time Zone.

In step 209, the IP-SM-GW takes the TP-SCTS field in step 208 as the SMS identifier of the second fragment, associates the SMS identifier with the IM identifier carried in the received SIP MESSAGE, and stores the SMS identifier in the SMS identifier item of the message identifier mapping table, as shown in Table 5, so as to store the corresponding relationship between the IM identifier and the SMS identifier of the second fragment.

**Table 5**

| **IM identifier** | **SMS identifier** |
|---|---|
| imdn.Message-ID:34jk324j | TP-SCTS: 70017121711080 |
| imdn.Message-ID:34jk324j | TP-SCTS: 70017121715480 |

In step 210, the SMS-SC sends a corresponding SMS-STATUS-REPORT to the IP-SM-GW according to an actual situation whether the called UE has received the first fragment of the short message. The SMS-STATUS-REPORT carries the SMS identifier of the first fragment, i.e. the TP-SCTS field is: "70017121711080".

In step 211, the IP-SM-GW sends an SMS-DELIVER-REPORT message to the SMS-SC in response to the SMS-STATUS-REPORT message sent in step 210.

In step 212, the IP-SM-GW looks up the IM identifier corresponding to the SMS identifier of the first fragment from the message identifier mapping table, maps the SMS-STATUS-REPORT in step 210 to the SIP MESSAGE, and continues to wait for the SMS-STATUS-REPORT requested by the second fragment of SMS-SUBMIT message.

In step 213, the SMS-SC sends a corresponding SMS-STATUS-REPORT to the IP-SM-GW according to an actual situation whether the called UE has received the second fragment of the short message. The SMS-STATUS-REPORT message carries the SMS identifier of the second fragments, i.e. the TP-SCTS field is: "70017121715480".

In step 214, the IP-SM-GW sends an SMS-DELIVER-REPORT message to the SMS-SC in response to the SMS-STATUS-REPORT message sent in step 213.

In step 215, the IP-SM-GW looks up the IM identifier corresponding to the SMS identifier of the second fragment from the message identifier mapping table, and maps the SMS-STATUS-REPORT in step 213 to the SIP MESSAGE. Till now, the SMS-STATUS-REPORTs requested by all fragments of SMS-SUBMIT messages are received.

In step 216, according to the message contents of the SMS-STATUS-REPORTs and the IMDN requirement in the corresponding SIP MESSAGE, a Notification is created to serve as the IM delivery status notification message.

In step 217, the IP-SM-GW sends the Notification to the calling UE.

In step 218, the calling UE returns a response message, i.e. 200 OK, in response to the received Notification.

In the second embodiment of the present invention, since the message content of the SIP MESSAGE exceeds the bearer capability of a single SMS message, the SIP MESSAGE is transformed into two fragments of SMS-SUBMIT messages and then transferred to the SMS-SC, and the time stamp TP-SCTS about time when the SMS-SC receives each corresponding fragment of SMS-SUBMIT message is obtained. The corresponding relationship between the IM identifier and the time stamp TP-SCTS of the corresponding fragment of SMS-SUBMIT message is established. After the SMS status report is received, the IM identifier corresponding to the TP-SCTS field carried in the SMS status report is firstly retrieved. After the SMS status reports of the two fragments of SMS-SUBMIT messages correspondingly transformed from the above SIP MESSAGE are received, the IM delivery status notification message carrying the IM identifier is generated according to the two SMS status reports and then sent to the calling party, so that the SMS message is mapped to the IM message, and thus the calling party is enabled to acquire whether the called party has received the IM message sent by the calling party.

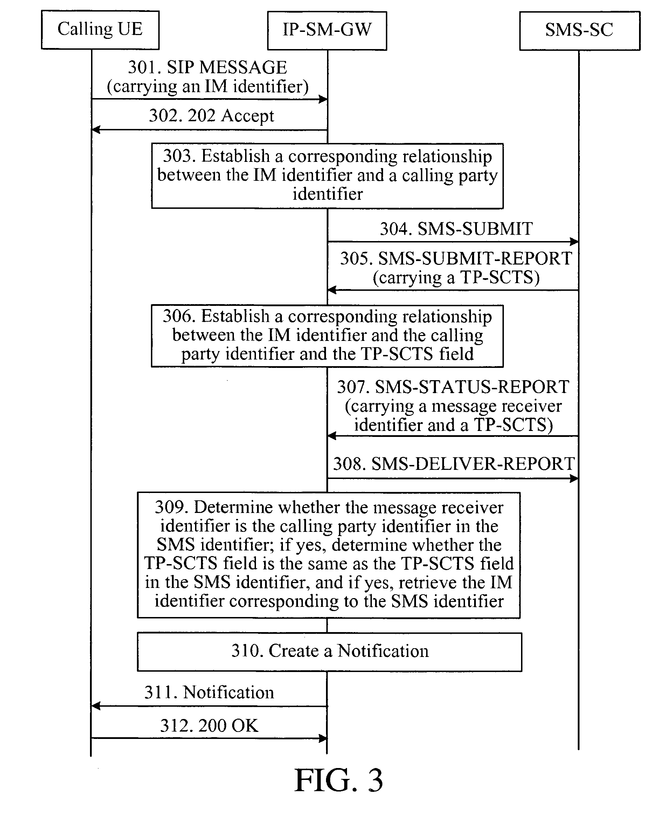

Referring to FIG. 3, in a third embodiment, the present invention provides a method for instant message delivery status notification. In this method, the IP-SM-GW establishes the corresponding relationship between the IM identifier and the SMS identifier. In this embodiment, the SMS identifier is a calling party identifier and a TP-SCTS field. The method specifically includes the following steps.

Steps 301 to 302 are the same as steps 101 to 102.

In step 303, the IP-SM-GW transforms an SIP MESSAGE into an SMS SUBMIT message in an SMS format and then sends the SMS SUBMIT message to the SMS-SC. The SMS SUBMIT message carries the calling party identifier and the TP-SRR field, where the TP-SRR field is set as 1 to indicate that an SMS-STATUS-REPORT is required.

In step 304, the IP-SM-GW stores the IM identifier carried in the SIP MESSAGE in the IM identifier item of the message identifier mapping table, and stores the calling party identifier in the SMS identifier item corresponding to the IM identifier item, as shown in Table 6.

**Table 6**

| **IM identifier** | **SMS identifier** |
|---|---|
| imdn.Message-ID:34jk324j | calling party identifier |

In step 305, the SMS-SC returns an SMS-SUBMIT-REPORT message in response to the received SMS-SUBMIT message. The TP-SCTS field in the SMS-SUBMIT-REPORT message is "70017121711080", which indicates that the SMS-SC receives the SMS-SUBMIT message at 12:17:01 on October 17, 2007, and that the SMS-SC is located within GMT+08 Time Zone.

In step 306, the IP-SM-GW takes the TP-SCTS field and the calling party identifier as the SMS identifier, and stores the TP-SCTS field and the calling party identifier in the same SMS identifier item corresponding to the same IM identifier, as shown in Table 7. The corresponding relationship between the IM identifier and the calling party identifier and the TP-SCTS field is established.

**Table 7**

| **IM identifier** | **SMS identifier** |
|---|---|
| imdn.Message-ID:34jk324j | calling party identifier |
| | TP-SCTS: 70017121711080 |

In step 307, the SMS-SC sends an SMS-STATUS-REPORT to the IP-SM-GW according to an actual situation whether the called UE has received the short message, where the SMS-STATUS-REPORT message carries the TP-SCTS field and a message receiver identifier. The TP-SCTS field is "70017121711080", and the message receiver identifier in this step is a receiver identifier of the SMS-STATUS-REPORT message.

In step 308, the IP-SM-GW returns an SMS-DELIVER-REPORT message to the SMS-SC in response to the received SMS-STATUS-REPORT message.

In step 309, the IP-SM-GW determines whether the message receiver identifier is the calling party identifier in the SMS identifier, and if the message receiver identifier is the calling party identifier in the SMS identifier, the IP-SM-GW further determines whether the TP-SCTS field is the same as the TP-SCTS field in the SMS identifier, and if the TP-SCTS field is the same as the TP-SCTS field in the SMS identifier, the IP-SM-GW retrieves the IM identifier corresponding to the SMS identifier, and maps the SMS-STATUS-REPORT message to the SIP MESSAGE.

In step 310, according to the message content of the SMS-STATUS-REPORT message and the IMDN requirement in the corresponding SIP MESSAGE, a Notification is created to serve as the IM delivery status notification message. The IM delivery status notification message carries the IM identifier.

The manner of creating the Notification in this step is the same as that in the first embodiment, which is thus not repeated here.

Steps 311 to 312 are the same as steps 109 to 110 in the first embodiment.

Step 304 may be performed after step 305, and may also be performed together with step 306 after step 305 is performed.

In the third embodiment of the present invention, the corresponding relationship between the IM identifier and the SMS identifier is established, and the SMS identifier includes the calling party identifier and the TP-SCTS field. After the SMS status report carrying the message receiver identifier and the TP-SCTS field sent by the SMS-SC is received, it is determined whether the message receiver identifier is the calling party identifier in the SMS identifier, and if the message receiver identifier is the calling party identifier in the SMS identifier, it is further determined whether the TP-SCTS field carried in the received SMS status report is the same as the TP-SCTS field in the SMS identifier, and if the TP-SCTS field carried in the received SMS status report is the same as the TP-SCTS field in the SMS identifier, the received SMS status report is taken as the SMS status report carrying the above SMS identifier. Then, the IM identifier corresponding to the above SMS identifier is retrieved, and the retrieved IM identifier is carried in the IM delivery status notification message and then sent to the calling party, so that the SMS message is mapped to the IM message, and thus the calling party is enabled to acquire whether the called party has received the IM message sent by the calling party.

In the third embodiment of the present invention, the IM message that does not exceed the bearer capability of a single SMS message is described as an example. If the IM message exceeds the bearer capability of a single SMS message, the IM message is transformed into a plurality of fragments of SMS messages, and the corresponding relationship between the IM identifier and the calling party identifier and time stamp of each corresponding fragment of SMS message is established. After the SMS status report carrying the message receiver identifier and the TP-SCTS field sent by the SMS-SC is received, it is determined whether the message receiver identifier is the calling party identifier in the SMS identifier, and if the message receiver identifier is the calling party identifier in the SMS identifier, it is further determined whether the TP-SCTS field carried in the received SMS status report is the same as the TP-SCTS field in the SMS identifier, and if the TP-SCTS field carried in the received SMS status report is the same as the TP-SCTS field in the SMS identifier, the received SMS status report is taken as the SMS status report carrying the above SMS identifier. After the SMS status report corresponding to each fragment of SMS-SUBMIT message correspondingly transformed from the SIP MESSAGE is received, the IM delivery status notification message carrying the IM identifier is generated according to the SMS status reports and then sent to the calling party, so that the SMS message is mapped to the IM message, and thus the calling party is enabled to acquire whether the called party has received the IM message sent by the calling party.

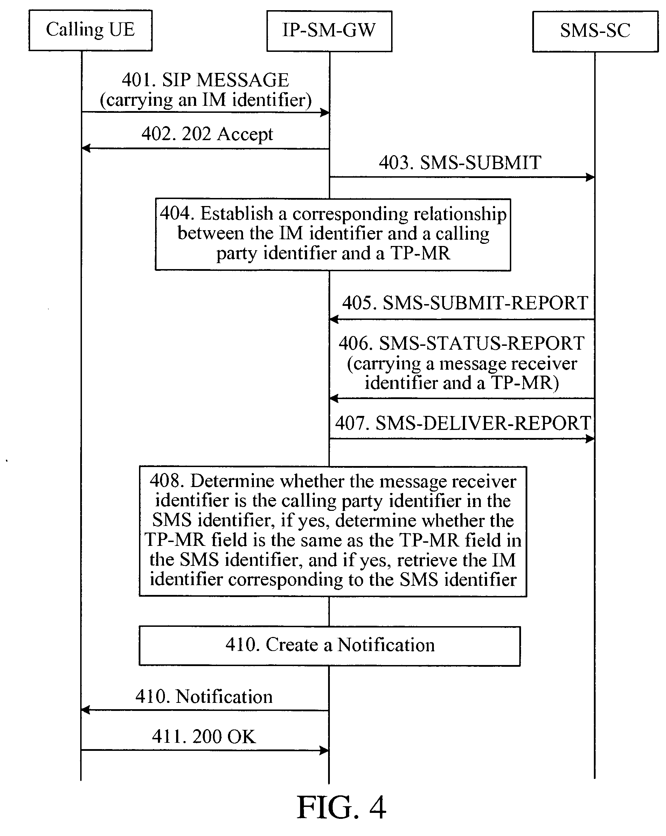

Referring to FIG. 4, in a fourth embodiment, the present invention provides a method for instant message delivery status notification. The IP-SM-GW establishes the corresponding relationship between the IM identifier and the SMS identifier. In this embodiment, the SMS identifier includes a calling party identifier and a TP-MR. The method specifically includes the following steps.

Steps 401 to 402 are the same as steps 101 to 102 in the first embodiment.

In step 403, the IP-SM-GW transforms an SIP MESSAGE into an SMS SUBMIT message in an SMS format and then sends the SMS SUBMIT message to the SMS-SC, where the SMS-SUBMIT message carries the calling party identifier and the TP-MR.

The calling party identifier is obtained from the IM message, and the TP-MR is generated by the IP-SM-GW itself.

In step 404, the IP-SM-GW stores the IM identifier carried in the SIP MESSAGE in the IM identifier item of the message identifier mapping table, and stores the calling party identifier and the TP-MR in the SMS identifier item to serve as the SMS identifier, so that the corresponding relationship between the IM identifier and the calling party identifier and TP-MR is established, as shown in Table 8.

**Table 8**

| **IM identifier** | **SMS identifier** |
|---|---|
| imdn.Message-ID:34jk324j | calling party identifier |
| | TP-MR |

This step may be performed at the same time as step 403, or performed before step 403, which does not influence the realization of the present invention.

In step 405, the SMS-SC returns an SMS-SUBMIT-REPORT message in response to the received SMS-SUBMIT message.

In step 406, the SMS-SC sends an SMS-STATUS-REPORT message to the IP-SM-GW according to an actual situation whether the called UE has received the short message, where the SMS-STATUS-REPORT message carries a TP-MR field and a message receiver identifier. The message receiver identifier in this step is a receiver identifier of the SMS-STATUS-REPORT message.

In step 407, the IP-SM-GW returns an SMS-DELIVER-REPORT message to the SMS-SC in response to the received SMS-STATUS-REPORT message.

In step 408, the IP-SM-GW determines whether the message receiver identifier is the calling party identifier in the SMS identifier, and if the message receiver identifier is the calling party identifier in the SMS identifier, the IP-SM-GW further determines whether the TP-MR field is the same as the TP-MR field in the SMS identifier, and if the TP-MR field is the same as the TP-MR field in the SMS identifier, the IP-SM-GW retrieves the IM identifier corresponding to the TP-MR field, and maps the SMS-STATUS-REPORT message to the SIP MESSAGE.

The manner of creating the Notification in this step is the same as that in the first embodiment, which is thus not repeated here.

Steps 409 to 411 are the same as steps 310 to 312.

In the fourth embodiment of the present invention, if the message content of the SIP MESSAGE exceeds the bearer capability of a single SMS message, the SIP MESSAGE is transformed into a plurality of fragments of SMS-SUBMIT messages. The corresponding relationship between the IM identifier and the calling party identifier and the TP-MR corresponding to each fragment of SMS-SUBMIT message is established. After the SMS status report carrying the message receiver identifier and the TP-MR field sent by the SMS-SC is received, it is determined whether the message receiver identifier is the calling party identifier in the SMS identifier, and if the message receiver identifier is the calling party identifier in the SMS identifier, it is further determined whether the TP-MR field carried in the received SMS status report is the same as the TP-MR field in the SMS identifier, and if the TP-MR field carried in the received SMS status report is the same as the TP-MR field in the SMS identifier, the received SMS status report is taken as the SMS status report carrying the above SMS identifier. After the SMS status report corresponding to each fragment of SMS-SUBMIT message transformed from the SIP MESSAGE is received, the IM delivery status notification message carrying the IM identifier is generated according to the SMS status reports and then sent to the calling party, so that the SMS message is mapped to the IM message, and thus the calling party is enabled to acquire whether the called party has received the IM message sent by the calling party.

In the fourth embodiment of the present invention, the corresponding relationship between the IM identifier and the SMS identifier is established, and the SMS identifier includes the calling party identifier and the TP-MR. After the SMS status report carrying the message receiver identifier and the TP-MR sent by the SMS-SC is received, it is determined whether the message receiver identifier is the calling party identifier in the SMS identifier, and if the message receiver identifier is the calling party identifier in the SMS identifier, it is further determined whether the TP-MR carried in the received SMS status report is the same as the TP-MR in the SMS identifier, and if the TP-MR carried in the received SMS status report is the same as the TP-MR in the SMS identifier, the received SMS status report is taken as the SMS status report carrying the above SMS identifier. The IM identifier corresponding to the above SMS identifier is retrieved, and the retrieved IM identifier is carried in the IM delivery status notification message and then sent to the calling party, so that the SMS message is mapped to the IM message, and thus the calling party is enabled to acquire whether the called party has received the IM message sent by the calling party.

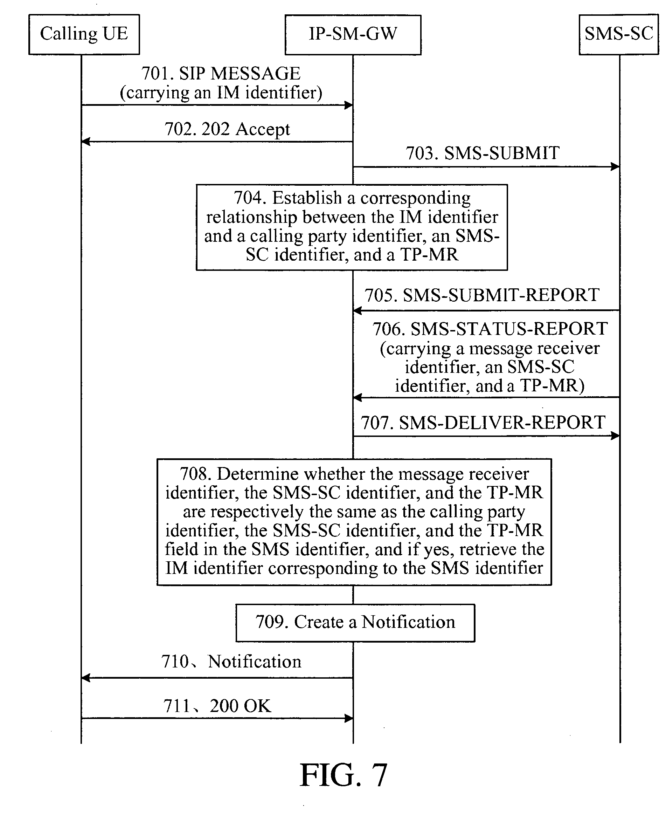

Referring to FIG. 7, in a seventh embodiment, the present invention provides a method for instant message delivery status notification. The IP-SM-GW establishes the corresponding relationship between the IM identifier and the SMS identifier. In this embodiment, the SMS identifier includes a calling party identifier, an SMS-SC identifier, and a TP-MR. The method specifically includes the following steps.

Steps 701 to 702 are the same as steps 101 to 102 in the first embodiment.

In step 703, the IP-SM-GW transforms an SIP MESSAGE into an SMS SUBMIT message in an SMS format and then sends the SMS SUBMIT message to the SMS-SC, where the SMS-SUBMIT message carries the calling party identifier, the SMS-SC identifier, and the TP-MR.

The calling party identifier is carried in a Short Message Relay Protocol Origination Address (SM-RP-OA) field, the TP-MR is generated by the IP-SM-GW itself, and the SMS-SC identifier is carried in a Short Message Relay Protocol Destination Address (SM-RP-DA) field.

The calling party identifier and the SMS-SC identifier may also be carried in other fields, which are not listed herein.

In step 704, the IP-SM-GW stores the IM identifier carried in the SIP MESSAGE in the IM identifier item of the message identifier mapping table, and stores the calling party identifier, the SMS-SC identifier, and the TP-MR in the SMS identifier item to serve as the SMS identifier, so that the corresponding relationship between the IM identifier and the calling party identifier, the SMS-SC identifier, and the TP-MR is established, as shown in Table 9.

**Table 9**

| **IM identifier** | **SMS identifier** |
|---|---|
| imdn.Message-ID:34jk324j | calling party identifier |
| | SMS-SC identifier |
| | TP-MR |

This step may be performed at the same time as step 703, or performed before step 703, which does not influence the realization of the present invention.

In step 705, the SMS-SC returns an SMS-SUBMIT-REPORT message in response to the received SMS-SUBMIT message.

In step 706, the SMS-SC sends an SMS-STATUS-REPORT to the IP-SM-GW according to an actual situation whether the called UE has received the short message, where the SMS-STATUS-REPORT message carries a TP-MR field, a message receiver identifier, and an SMS-SC identifier.

The message receiver identifier is carried by information carried in a TP-Receipt Address (TP-RA) field or an SM-RP-DA field, and the SMS-SC identifier is carried in an SM-RP-OA field.

The message receiver identifier and the SMS-SC identifier may also be carried in other fields, which are not listed herein.

In step 707, the IP-SM-GW returns an SMS-DELIVER-REPORT message to the SMS-SC', in response to the received SMS-STATUS-REPORT message.

In step 708, the IP-SM-GW determines whether the message receiver identifier, the SMS-SC identifier, and the TP-MR are respectively the same as the calling party identifier, the SMS-SC identifier, and the TP-MR in the SMS identifier, and if the message receiver identifier, the SMS-SC identifier, and the TP-MR are respectively the same as the calling party identifier, the SMS-SC identifier, and the TP-MR in the SMS identifier, the corresponding IM identifier is retrieved, and the SMS-STATUS-REPORT message is mapped to the SIP MESSAGE.

The manner of creating the Notification in this step is the same as that in the first embodiment, which is thus not repeated here.

Steps 709 to 711 are the same as steps 310 to 312.

In the seventh embodiment of the present invention, when the message content of the SIP MESSAGE exceeds the bearer capability of a single SMS message, the SIP MESSAGE is transformed into a plurality of fragments of SMS-SUBMIT messages. The corresponding relationship between the IM identifier and the calling party identifier, the SMS-SC identifier, and the TP-MR corresponding to each fragment of SMS-SUBMIT message is established. After the SMS status report carrying the message receiver identifier, the SMS-SC identifier, and the TP-MR field sent by the SMS-SC is received, it is determined whether the message receiver identifier, the SMS-SC identifier, and the TP-MR field are respectively the same as the calling party identifier, the SMS-SC identifier, and the TP-MR field in the SMS identifier, and if the message receiver identifier, the SMS-SC identifier, and the TP-MR field are respectively the same as the calling party identifier, the SMS-SC identifier, and the TP-MR field in the SMS identifier, the received SMS status report is taken as the SMS status report carrying the above SMS identifier. After the SMS status report corresponding to each fragment of SMS-SUBMIT message transformed from the SIP MESSAGE is received, the 1M delivery status notification message carrying the IM identifier is generated according to the SMS status reports, and then sent to the calling party, so that the SMS message is mapped to the IM message, and thus the calling party is enabled to acquire whether the called party has received the IM message sent by the calling party.

In the seventh embodiment of the present invention, the corresponding relationship between the IM identifier and the SMS identifier is established, and the SMS identifier includes the calling party identifier, the SMS-SC identifier, and the TP-MR. After the SMS status report carrying the message receiver identifier, the SMS-SC identifier, and the TP-MR sent by the SMS-SC is received, it is determined whether the message receiver identifier, the SMS-SC identifier, and the TP-MR are respectively the same as the calling party identifier, the SMS-SC identifier, and the TP-MR field in the SMS identifier, and if the message receiver identifier, the SMS-SC identifier, and the TP-MR are respectively the same as the calling party identifier, the SMS-SC identifier, and the TP-MR field in the SMS identifier, the received SMS status report is taken as the SMS status report carrying the above SMS identifier. The IM identifier corresponding to the above SMS identifier is retrieved, and the retrieved IM identifier is carried in the IM delivery status notification message and then sent to the calling party, so that the SMS message is mapped to the IM message, and thus the calling party is enabled to acquire whether the called party has received the IM message sent by the calling party.

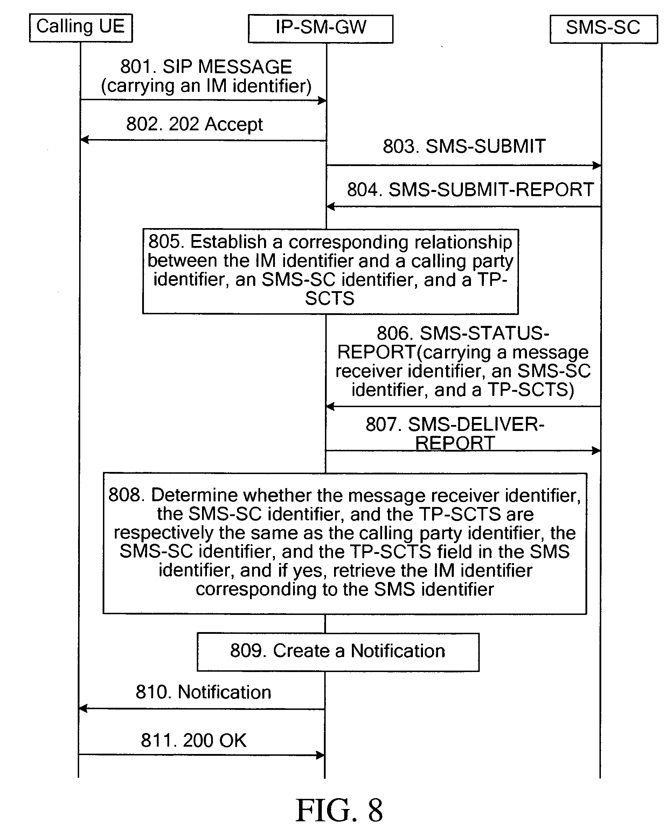

Referring to FIG. 8, in an eighth embodiment, the present invention provides a method for instant message delivery status notification. The IP-SM-GW establishes the corresponding relationship between the IM identifier and the SMS identifier. In this embodiment, the SMS identifier includes a calling party identifier, an SMS-SC identifier, and a TP-SCTS field. The method specifically includes the following steps.

Steps 801 to 802 are the same as steps 101 to 102 in the first embodiment.

In step 803, the IP-SM-GW transforms an SIP MESSAGE into an SMS SUBMIT message in an SMS format and then sends the SMS SUBMIT message to the SMS-SC, where the SMS-SUBMIT message carries the calling party identifier and the SMS-SC identifier.

The calling party identifier is carried in an SM-RP-OA field, and the SUMS-SC identifier is carried in an SM-RP-DA field.

The calling party identifier and the SMS-SC identifier may also be carried in other fields, which are not listed herein.

In step 804, the SMS-SC returns an SMS-SUBMIT-REPORT message in response to the received SMS-SUBMIT message, where the TP-SCTS field in the SMS-SUBMIT REPORT message is "70017121711080", which indicates that the SMS-SIC receives the SMS-SUBMIT message at 12:17:01 on October 17, 2007, and that the SMS-SC is located within GMT+08 Time Zone.

In step 805, the IP-SM-GW stores the IM identifier carried in the SIP MESSAGE in the IM identifier item of the message identifier mapping table, and stores the calling party identifier, the SMS-SC identifier, and the TP-SCTS in the SMS identifier item as the SMS identifier, so that the corresponding relationship between the IM identifier and the calling party identifier, the SMS-SC identifier, and the TP-SCTS is established, as shown in Table 10.

**Table 10**

| **IM identifier** | **SMS identifier** |
|---|---|
| imdn.Message-ID: 34jk324j | calling party identifier |
| | SMS-SC identifier |
| | TP-SCTS: 70017121711080 |

The IP-SM-GW may also establish the corresponding relationship between the calling party identifier or the SMS-SC identifier in the SMS identifier and the IM identifier carried in the SIP MESSAGE after step 802 or step 803.

In step 806, the SMS-SC sends an SMS-STATUS-REPORT to the IP-SM-GW according to an actual situation whether the called UE has received the short message, where the SMS-STATUS-REPORT message carries a TP-SCTS field, a message receiver identifier, and an SMS-SC identifier. The TP-SCTS field is: "70017121711080".

The message receiver identifier may be carried by information carried in a TP-RA field or an SM-RP-DA field, and the SMS-SC identifier may be carried in an SM-RP-OA field.

The message receiver identifier and the SMS-SC identifier may also be carried in other fields, which are not listed herein.

In step 807, the IP-SM-GW returns an SMS-DELIVER-REPORT message to the SMS-SC in response to the received SMS-STATUS-REPORT message.

In step 808, the IP-SM-GW determines whether the message receiver identifier, the SMS-SC identifier, and the TP-SCTS are respectively the same as the calling party identifier, the SMS-SC identifier, and the TP-SCTS in the SMS identifier, and if the message receiver identifier, the SMS-SC identifier, and the TP-SCTS are respectively the same as the calling party identifier, the SMS-SC identifier, the corresponding IM identifier is retrieved, and the SMS-STATUS-REPORT message is mapped to the SIP MESSAGE.

The manner of creating the Notification in this step is the same as that in the first embodiment, which is thus not repeated here.

Steps 809 to 811 are the same as steps 310 to 312.

In the eighth embodiment of the present invention, when the message content of the SIP MESSAGE exceeds the bearer capability of a single SMS message, the SIP MESSAGE is transformed into a plurality of fragments of SMS-SUBMIT messages. The corresponding relationship between the IM identifier and the calling party identifier, the SMS-SC identifier, and the TP-SCTS corresponding to each fragment of SMS-SUBMIT message is established. After the SMS status report carrying the message receiver identifier, the SMS-SC identifier, and the TP-SCTS field sent by the SMS-SC is received, it is determined whether the message receiver identifier, the SMS-SC identifier, and the TP-SCTS field are respectively the same as the calling party identifier, the SMS-SC identifier, and the TP-SCTS field in the SMS identifier, and if the message receiver identifier, the SMS-SC identifier, and the TP-SCTS field are respectively the same as the calling party identifier, the SMS-SC identifier, and the TP-SCTS field in the SMS identifier, the received SMS status report is taken as the SMS status report carrying the above SMS identifier. After the SMS status report corresponding to each fragment of SMS-SUBMIT message transformed from the SIP MESSAGE is received, the IM delivery status notification message carrying the IM identifier is generated according to the SMS status reports and then sent to the calling party, so that the SMS message is mapped to the IM message, and thus the calling party is enabled to acquire whether the called party has received the IM message sent by the calling party.

In the eighth embodiment of the present invention, the corresponding relationship between the IM identifier and the SMS identifier is established, and the SMS identifier includes the calling party identifier, the SMS-SC identifier, and the TP-SCTS. After the SMS status report carrying the message receiver identifier, the SMS-SC identifier, and the TP-SCTS sent by the SMS-SC is received, it is determined whether the message receiver identifier, the SMS-SC identifier, and the TP-SCTS are respectively the same as the calling party identifier, the SMS-SC identifier, and the TP-SCTS field in the SMS identifier, and if the message receiver identifier, the SMS-SC identifier, and the TP-SCTS are respectively the same as the calling party identifier, the SMS-SC identifier, and the TP-SCTS field in the SMS identifier, the received SMS status report is taken as the SMS status report carrying the above SMS identifier. The IM identifier corresponding to the above SMS identifier is retrieved, and the retrieved IM identifier is carried in the IM delivery status notification message and then sent to the calling party, so that the SMS message is mapped to the IM message, and thus the calling party is enabled to acquire whether the called party has received the IM message sent by the calling party.

Persons of ordinary skill in the art can understand that all or part of steps in the method of the above embodiments may be realized by instructing relevant hardware through programs, and the programs may be stored in a computer readable storage medium, such as a ROM, a magnetic disc, or an optical disc.

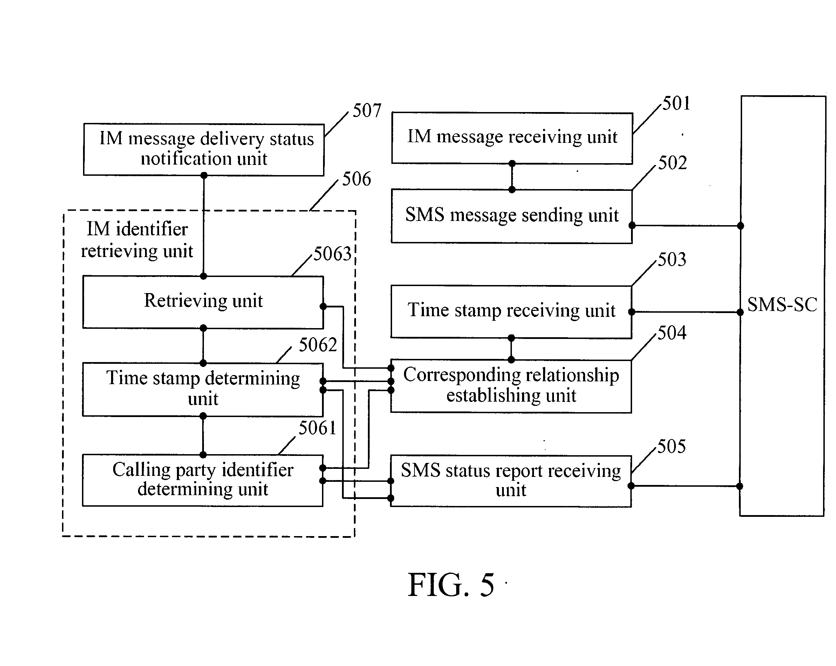

Referring to FIG. 5, in a fifth embodiment, the present invention provides network element equipment, which may be an IP-SM-GW. In order to clearly show the connection relationships among all units in the network element equipment, the SMS-SC is also depicted in FIG. 5. The network element equipment includes an IM message receiving unit 501, an SMS message sending unit 502, a time stamp receiving unit 503, a corresponding relationship establishing unit 504, an SMS status report receiving unit 505, an IM identifier retrieving unit 506, and an IM message delivery status notification unit 507.

The IM message receiving unit 501 is configured to receive an IM message which is sent by a calling party and carries an IM identifier.

The SMS message sending unit 502 is configured to transform the received IM message into an SMS message for being sent to the SMS-SC, and configured to transform the IM message into a plurality of fragments of SMS messages for being sent to the SMS-SC when the IM message exceeds a bearer capability of a single SMS message.

The time stamp receiving unit 503 is configured to receive a time stamp corresponding to the SMS message sent by the SMS-SC, where the time stamp corresponding to the SMS message is a time at which the SMS-SC receives the SMS message.

The corresponding relationship establishing unit 504 is configured to establish a corresponding relationship between the IM identifier and an SMS identifier corresponding to the SMS message, where when the IM message exceeds the bearer capability of a single SMS message, the SMS identifier in this unit is an SMS identifier of each fragment corresponding to each fragment of SMS message.

The SMS status report receiving unit 505 is configured to receive an SMS status report which is sent by the SMS-SC and carries the SMS identifier.

The IM identifier retrieving unit 506 further includes a calling party identifier determining unit 5061, a time stamp determining unit 5062, and a retrieving unit 5063.

The calling party identifier determining unit 5061 is configured to determine whether a receiver identifier carried in the SMS status report is a calling party identifier.

The time stamp determining unit 5062 is configured to determine whether a time stamp carried in the received SMS status report is the same as a time stamp in the SMS identifier.

The time stamp determining unit 5062 may determine whether the time stamp carried in the received SMS status report is the same as the time stamp in the SMS identifier before, after, or at the same time as the calling party identifier determining unit 5061 obtains the determining result.

When the determining results of the calling party identifier determining unit 5061 and the time stamp determining unit 5062 are both "yes", the retrieving unit 5063 is configured to retrieve the IM identifier corresponding to the SMS identifier based on the established corresponding relationship between the IM identifier and the SMS identifier.

The IM message delivery status notification unit 507 is configured to generate an IM delivery status notification message carrying the IM identifier according to all the SMS status reports carrying the SMS identifier of each fragment corresponding to the IM identifier.

In another embodiment of the present invention, the SMS identifier in the corresponding relationship establishing unit 504 further includes an SMS-SC identifier.

The SMS status report received by the SMS status report receiving unit 505 further carries an SMS-SC identifier in the SMS status report.

The IM identifier retrieving unit 506 further includes an SMS-SC identifier determining unit.

The SMS-SC identifier determining unit (not shown) is configured to determine whether the SMS-SC identifier carried in the SMS status report is the SMS-SC identifier in the corresponding relationship establishing unit 504.

When the determining results of the calling party identifier determining unit 5061, the time stamp determining unit 5062, and the SMS-SC identifier determining unit are all "yes", the retrieving unit 5063 is further configured to retrieve the IM identifier corresponding to the SMS identifier based on the established corresponding relationship between the IM identifier and the SMS identifier.

In the fifth embodiment of the present invention, the corresponding relationship establishing unit 504 establishes the corresponding relationship between the IM identifier and the SMS identifier, and the SMS identifier includes a calling party identifier and a TP-SCTS field. After the SMS status report receiving unit 505 receives the SMS status report carrying a message receiver identifier and a TP-SCTS field sent by the SMS-SC, the calling party identifier determining unit 5061 determines whether the message receiver identifier is the calling party identifier in the SMS identifier, and if the message receiver identifier is the calling party identifier in the SMS identifier, the time stamp determining unit 5062 continues to determine whether the TP-SCTS field carried in the received SMS status report is the same as the TP-SCTS field in the SMS identifier, and if the TOP-SCOTS field carried in the received SMS status report is the same as the TP-SCTS field in the SMS identifier, the retrieving unit 5063 retrieves the IM identifier corresponding to the above SMS identifier. The IM message delivery status notification unit 507 generates the IM delivery status notification message carrying the IM identifier, and maps the SMS message to the IM message, so that the calling party is enabled to acquire whether the called party has received the IM message sent by the calling party.

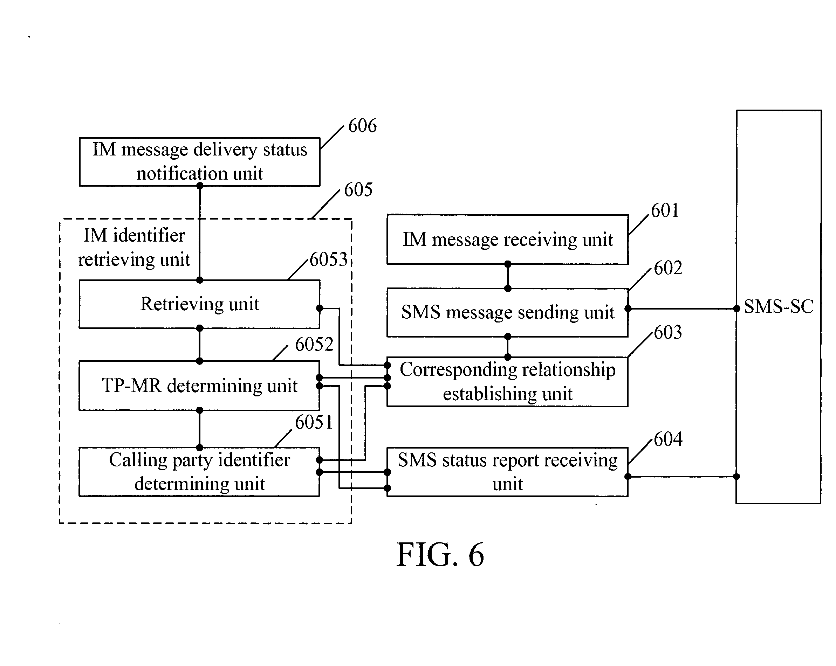

Referring to FIG. 6, in a sixth embodiment, the present invention provides a network element equipment, which may be an IP-SM-GW. In order to clearly show the connection relationships among all units in the network element equipment, the SMS-SC is also depicted in FIG. 6. The network element equipment includes an IM message receiving unit 601, an SMS message sending unit 602, a corresponding relationship establishing unit 603, an SMS status report receiving unit 604, an IM identifier retrieving unit 605, and an IM message delivery status notification unit 606.

The IM message receiving unit 601 is configured to receive an IM message which is sent by a calling party and carries an IM identifier.

The SMS message sending unit 602 is configured to transform the IM message into an SMS message carrying a TP-MR and a calling party identifier which is then sent to the SMS-SC, and is further configured to transform the IM message into a plurality of fragments of SMS messages which is then sent to the SMS-SC, when the IM message exceeds a bearer capability of a single SMS message.

The corresponding relationship establishing unit 603 is configured to establish a corresponding relationship between the IM identifier and an SMS identifier for identifying the SMS message, where the SMS identifier includes the TP-MR and the calling party identifier. When the IM message exceeds the bearer capability of a single SMS message, the SMS identifier in this unit is an SMS identifier of each fragment corresponding to each fragment of SMS message.

The SMS status report receiving unit 604 is configured to receive an SMS status report which is sent by the SMS-SC and carries the SMS identifier.

The IM identifier retrieving unit 605 further includes a calling party identifier determining unit 6051, a TP-MR determining unit 6052, and a retrieving unit 6053.

The calling party identifier determining unit 6051 is configured to determine whether a receiver identifier carried in the SMS status report is the calling party identifier.

The TP-MR determining unit 6052 is configured to determine whether a TP-MR carried in the received SMS status report is the same as the TP-MR in the SMS identifier.

The TP-MR determining unit 6052 may determine whether the TP-MR carried in the received SMS status report is the same as the TP-MR in the SMS identifier before, after, or at the same time as the calling party identifier determining unit 6051 obtains the determining result.

When the determining results of the calling party identifier determining unit 6051 and the TP-MR determining unit 6052 are both "yes", the retrieving unit 6053 is configured to retrieve the IM identifier corresponding to the SMS identifier based on the established corresponding relationship between the IM identifier and the SMS identifier.

The IM message delivery status notification unit 606 is configured to generate an IM delivery status notification message carrying the 1M identifier according to all the SMS status reports carrying the SMS identifier of each fragment corresponding to the IM identifier.

In another embodiment of the present invention, the SMS identifier in the corresponding relationship establishing unit 603 further includes an SMS-SC identifier.

The SMS status report received by the SMS status report receiving unit 604 further carries an SMS-SC identifier in the SMS status report.

The IM identifier retrieving unit 605 further includes an SMS-SC identifier determining unit.

The SMS-SC identifier determining unit (not shown) is configured to determine whether the SMS-SC identifier carried in the SMS status report is the SMS-SC identifier in the corresponding relationship establishing unit 603.

When the determining results of the calling party identifier determining unit 6051, the TP-MR determining unit 6052, and the SMS-SC identifier determining unit are all "yes", the retrieving unit 6053 is further configured to retrieve the IM identifier corresponding to the SMS identifier based on the established corresponding relationship between the IM identifier and the SMS identifier.

In the sixth embodiment of the present invention, the corresponding relationship establishing unit 603 establishes the corresponding relationship between the IM identifier and the SMS identifier, and the SMS identifier includes a calling party identifier and a TP-MR. After the SMS status report receiving unit 604 receives the SMS status report carrying a message receiver identifier and a TP-MR sent by the SMS-SC, the calling party identifier determining unit 6051 determines whether the message receiver identifier is the calling party identifier in the SMS identifier, and if the message receiver identifier is the calling party identifier in the SMS identifier, the TP-MR determining unit 6052 continues to determine whether the TP-MR carried in the received SMS status report is the same as the TP-MR in the SMS identifier, and if the TP-MR carried in the received SMS status report is the same as the TP-MR in the SMS identifier, the retrieving unit 6053 retrieves the IM identifier corresponding to the above SMS identifier. The IM message delivery status notification unit 606 generates the IM delivery status notification message carrying the IM identifier, and maps the SMS message to the IM message, so that the calling party is enabled to acquire whether the called party has received the IM message sent by the calling party.

In the seventh embodiment, the present invention provides a network system, which includes an IP-SM-GW and an SMS-SC.

The IP-SM-GW is configured to receive an IM message which is sent by a calling party and carries an IM identifier; transform the IM message into an SMS message which is then sent to the SMS-SC; receive a time stamp corresponding to the SMS message sent by the SMS-SC, where the time stamp corresponding to the SMS message is a time at which the SMS-SC receives the SMS message; establish a corresponding relationship between the IM identifier and an SMS identifier for identifying the SMS message, where the SMS identifier includes the time stamp corresponding to the SMS message; receive an SMS status report which is sent by the SMS-SC and carries the SMS identifier; retrieve the IM identifier corresponding to the SMS identifier carried in the SMS status report based on the established corresponding relationship between the IM identifier and the SMS identifier; and generate an IM delivery status notification message carrying the retrieved IM identifier which is then sent to the calling party.

The SMS-SC is configured to receive the SMS message sent by the IP-SM-GW, send the time stamp corresponding to the SMS message to the IP-SM-GW, and send the SMS status report carrying the SMS identifier to the IP-SM-GW.

In the seventh embodiment of the present invention, the IP-SM-GW establishes the corresponding relationship between the IM identifier and the SMS identifier, and the SMS identifier includes a calling party identifier and a TP-SCTS field. After receiving the SMS status report carrying a message receiver identifier and a TP-SCTS field sent by the SMS-SC, the IP-SM-GW determines whether the message receiver identifier is the calling party identifier in the SMS identifier, and if the message receiver identifier is the calling party identifier in the SMS identifier, the IP-SM-GW continues to determine whether the TP-SCTS field carried in the received SMS status report is the same as the TP-SCTS field in the SMS identifier, and if the TP-SCTS field carried in the received SMS status report is the same as the TP-SCTS field in the SMS identifier, the IP-SM-GW takes the received SMS status report as the SMS status report carrying the above SMS identifier. The IP-SM-GW retrieves the IM identifier corresponding to the above SMS identifier, sends the retrieved IM identifier to the calling party by carrying the IM identifier in the IM delivery status notification message, and maps the SMS message to the IM message, so that the calling party is enabled to acquire whether the called party has received the IM message sent by the calling party.

In the eighth embodiment, the present invention provides a network system, which includes an IP-SM-GW and an SMS-SC.

The IP-SM-GW is configured to receive an IM message which is sent by a calling party and carries an IM identifier; transform the IM message into an SMS message carrying a calling party identifier and a TP-MR which is then sent to the SMS-SC; and establish a corresponding relationship between the IM identifier and an SMS identifier, where the SMS identifier includes the calling party identifier and the TP-MR. After receiving an SMS status report carrying a message receiver identifier and a TP-MR sent by the SMS-SC, the IP-SM-GW determines whether the message receiver identifier is the calling party identifier, and if the message receiver identifier is the calling party identifier, the IP-SM-GW continues to determine whether the TP-MR carried in the SMS status report is the same as the TP-MR in the SMS identifier, and if the TP-MR carried in the SMS status report is the same as the TP-MR in the SMS identifier, the IP-SM-GW takes the received SMS status report as the SMS status report carrying the above SMS identifier. The IP-SM-GW retrieves the IM identifier corresponding to the SMS identifier carried in the SMS status report based on the established corresponding relationship between the IM identifier and the SMS identifier, and generates an IM delivery status notification message carrying the retrieved IM identifier which is then sent to the calling party.

The SMS-SC is configured to receive the SMS message sent by the IP-SM-GW, and send the SMS status report carrying the message receiver identifier and the TP-MR to the IP-SM-GW.

In the eighth embodiment of the present invention, the IP-SM-GW establishes the corresponding relationship between the IM identifier and the SMS identifier, and the SMS identifier includes the calling party identifier and the TP-MR. After receiving the SMS status report carrying the message receiver identifier and the TP-MR sent by the SMS-SC, the IP-SM-GW determines whether the message receiver identifier is the calling party identifier in the SMS identifier, and if the message receiver identifier is the calling party identifier in the SMS identifier, the IP-SM-GW continues to determine whether the TP-MR carried in the received SMS status report is the same as the TP-MR in the SMS identifier, and if the TP-MR carried in the received SMS status report is the same as the TP-MR in the SMS identifier, the received SMS status report is taken as the SMS status report carrying the above SMS identifier. The IP-SM-GW retrieves the IM identifier corresponding to the SMS identifier, sends the retrieved IM identifier to the calling party by carrying the IM identifier in the IM delivery status notification message, and maps the SMS message to the IM message, so that the calling party is enabled to acquire whether the called party has received the IM message sent by the calling party.

The method, network element equipment, and network system for instant message delivery status notification provided by the present invention have been described above in detail. Those of ordinary skill in the art can make variations and modifications to the present invention in terms of the specific implementations and application scopes according to the idea of the present invention. Therefore, the specification shall not be construed as limitations to the present invention.

## Claims

1. A method for instant message delivery status notification, comprising:
receiving an instant message IM which is sent by a calling party and carries an IM identifier, and transforming the IM message into a Short Message Service SMS message and sending the SMS message to an SMS Service Center SMS-SC;
receiving a time stamp of the SMS message sent by the SMS-SC;
establishing a corresponding relationship between the IM identifier and an SMS identifier corresponding to the SMS message, wherein the SMS identifier comprises the time stamp;
receiving an SMS status report which is sent by the SMS-SC and carries a time stamp,
retrieving the IM identifier corresponding to the SMS identifier based on the established corresponding relationship between the IM identifier and the SMS identifier, if the time stamp of the SMS status report is the same as the time stamp in the SMS identifier;
and generating an IM delivery status notification message carrying the IM identifier for being sent to the calling party.

2. The method according to claim 1, wherein
the SMS identifier further comprises a calling party identifier, the received SMS status report further carries a receiver identifier of the SMS status report; and
the retrieving the IM identifier corresponding to the SMS identifier based on the established corresponding relationship between the IM identifier and the SMS identifier further comprises:
determining whether the receiver identifier and the time stamp of the SMS status report are respectively the same as the calling party identifier and the time stamp in the SMS identifier, and if the receiver identifier and the time stamp of the SMS status report are respectively the same as the calling party identifier and the time stamp in the SMS identifier, retrieving the IM identifier corresponding to the SMS identifier based on the established corresponding relationship between the IM identifier and the SMS identifier.

3. The method according to claim 1, wherein,
the SMS identifier further comprises a calling party identifier, the received SMS status report further carries a receiver identifier of the SMS status report; and
the retrieving the IM identifier corresponding to the SMS identifier based on the established corresponding relationship between the IM identifier and the SMS identifier further comprises:
determining whether the message receiver identifier is the calling party identifier in the SMS identifier, and if the message receiver identifier is the calling party identifier in the SMS identifier, the IP-SM-GW further determines whether the time stamp of the SMS status report is the same as the time stamp in the SMS identifier, and if the time stamp of the SMS status report is the same as the time stamp in the SMS identifier, the IP-SM-GW retrieves the IM identifier corresponding to the SMS identifier based on the established corresponding relationship between the IM identifier and the SMS identifier.

4. The method according to claim 2 or 3, wherein
the calling party identifier is carried in a Short Message Relay Protocol Origination Address SM-RP-OA field of the SMS message.

5. The method according to claim 2 or 3 wherein
the receiver identifier is carried by information carried in a TP-Receipt Address TP RA field of the SMS status report or carried in a Short Message Relay Protocol Destination Address SM-RP-DA field.

6. The method according to claim 1, wherein
the IM message carries an instant message disposition notification IMDN; and
the generating the IM delivery status notification message carrying the IM identifier further comprises:
generating the IM delivery status notification message carrying the IM identifier according to the SMS status report and the IMDN.

7. The method according to claim 1, wherein
when the IM message exceeds a bearer capability of a single SMS message, the transforming the IM message into the SMS message further comprises: transforming the IM message into a plurality of fragments of SMS messages; and
the SMS identifier is an SMS identifier of each fragment corresponding to each fragment of SMS message.

8. The method according to claim 7, wherein the generating the IM delivery status notification message carrying the IM identifier further comprises:
generating the IM delivery status notification message carrying the IM identifier according to all SMS status reports carrying the SMS identifier of each fragment corresponding to the IM identifier.

9. A network element equipment, comprising:
an instant message IM receiving unit (501), configured to receive an IM message which is sent by a calling party and carries an IM identifier;
a Short Message Service SMS message sending unit (502), configured to transform the received IM message into an SMS message for being sent to an SMS Service Center SMS-SC;
a time stamp receiving unit (503), configured to receive a time stamp corresponding to the SMS message sent by the SMS-SC, wherein the time stamp corresponding to the SMS message is a time at which the SMS-SC receives the SMS message;
a corresponding relationship establishing unit (504), configured to establish a corresponding relationship between the IM identifier and an SMS identifier corresponding to the SMS message, wherein the SMS identifier in the corresponding relationship establishing unit (504) comprises the time stamp corresponding to the SMS message;
an SMS status report receiving unit (505), configured to receive an SMS status report which is sent by the SMS-SC and carries a time stamp;
an IM identifier retrieving unit (506), configured to retrieve the IM identifier corresponding to the SMS identifier carried in the SMS status report based on the established corresponding relationship between the IM identifier and the SMS identifier, if the time stamp of the SMS status report is the same as the time stamp in the SMS identifier; and
an IM message delivery status notification unit (507), configured to generate an IM delivery status notification message carrying the retrieved IM identifier for being sent to the calling party.

10. The equipment according to claim 9, wherein
the SMS identifier in the corresponding relationship establishing unit (504) further comprises a calling party identifier;
the SMS status report received by the SMS status report receiving unit (505) further carries a receiver identifier of the SMS status report; and
the IM identifier retrieving unit (506) further comprises:
a calling party identifier determining unit (5061), configured to determine whether the receiver identifier of the SMS status report is the calling party identifier;
a time stamp determining unit (5062), configured to determine whether the time stamp carried in the received SMS status report is the same as the time stamp in the SMS identifier; and
a retrieving unit (5063), configured to retrieve the IM identifier corresponding to the SMS identifier based on the established corresponding relationship between the IM identifier and the SMS identifier, when determining results of the calling party identifier determining unit (5061) and the time stamp determining unit (5062) are both "yes".

11. The equipment according to claim 9, wherein:
the SMS identifier in the corresponding relationship establishing unit (504) further comprises a calling party identifier;
the SMS status report received by the SMS status report receiving unit (505) further carries a receiver identifier of the SMS status report; and
the IM identifier retrieving unit (506) further comprises:
a calling party identifier determining unit (5061), configured to determine whether the receiver identifier of the SMS status report is the calling party identifier in the SMS identifier;
a time stamp determining unit (5062), configured to determine whether the time stamp carried in the received SMS status report is the same as the time stamp in the SMS identifier, if the message receiver identifier is the calling party identifier; and
a retrieving unit (5063), configured to retrieve the IM identifier corresponding to the SMS identifier based on the established corresponding relationship between the IM identifier and the SMS identifier, if the time stamp of the SMS status report is the same as the time stamp in the SMS identifier.

12. A network system, comprising: an Internet Protocol Short Message Gateway IP-SM-GW and a Short Message Service-Service Center SMS-SC, wherein
the IP-SM-GW is configured to receive an instant message IM which is sent by a calling party and carries an IM identifier, transform the IM message into an SMS message for being sent to the SMS-SC, receive a time stamp corresponding to the SMS message sent by the SMS-SC, and the time stamp corresponding to the SMS message is a time at which the SMS-SC receives the SMS message, establish a corresponding relationship between the IM identifier and an SMS identifier corresponding to the SMS message, wherein the SMS identifier comprises the time stamp corresponding to the SMS message, obtain an SMS status report which is sent by the SMS-SC and carries a time stamp, retrieve the IM identifier corresponding to the SMS identifier carried in the SMS status report based on the established corresponding relationship between the IM identifier and the SMS identifier, if the time stamp of the SMS status report is the same as the time stamp in the SMS identifier, and generate an IM delivery status notification message carrying the retrieved IM identifier for being sent to the calling party; and
the SMS-SC is configured to receive the SMS message sent by the IP-SM-GW, and send the SMS status report carrying the SMS identifier to the IP-SM-GW.

## Patentansprüche

1. Verfahren zur Sofortnachrichten-Zustellungsstatusmeldung, das Folgendes umfasst:
Empfangen einer Sofortnachricht, IM, die durch einen rufenden Teilnehmer gesendet wird und eine IM-Kennung führt, und Umsetzen der IM-Nachricht in eine Kurznachrichtendienst-Nachricht, SMS-Nachricht, und Senden der SMS-Nachricht zu einem SMS-Dienstzentrum, SMS-SC;
Empfangen eines durch das SMS-SC gesendeten Zeitstempels der SMS-Nachricht; Herstellen einer Zuordnungsbeziehung zwischen der IM-Kennung und einer SMS-Kennung, die der SMS-Nachricht entspricht, wobei die SMS-Kennung den Zeitstempel umfasst;
Empfangen eines SMS-Statusberichts, der durch das SMS-SC gesendet wird und einen Zeitstempel führt,
Abfragen der IM-Kennung, die der SMS-Kennung entspricht, basierend auf der hergestellten Zuordnungsbeziehung zwischen der IM-Kennung und der SMS-Kennung, wenn der Zeitstempel des SMS-Statusberichts der gleiche ist wie der Zeitstempel in der SMS-Kennung;
und Erzeugen einer IM-Zustellungsstatusmeldungsnachricht, die die IM-Kennung führt, um zum rufenden Teilnehmer gesendet zu werden.

2. Verfahren nach Anspruch 1, wobei
die SMS-Kennung ferner eine Kennung des rufenden Teilnehmers umfasst und der empfangene SMS-Statusbericht ferner eine Empfänger-Kennung des SMS-Statusberichts führt; und
das Abfragen der IM-Kennung, die der SMS-Kennung entspricht, basierend auf der hergestellten Zuordnungsbeziehung zwischen der IM-Kennung und der SMS-Kennung ferner Folgendes umfasst:
Bestimmen, ob die Empfänger-Kennung und der Zeitstempel des SMS-Statusberichts jeweils die gleichen sind wie die Kennung des rufenden Teilnehmers und der Zeitstempel in der SMS-Kennung, und wenn die Empfänger-Kennung und der Zeitstempel des SMS-Statusberichts jeweils die gleichen sind wie die Kennung des rufenden Teilnehmers und der Zeitstempel in der SMS-Kennung, Abrufen der IM-Kennung, die der SMS-Kennung entspricht, basierend auf der hergestellten Zuordnungsbeziehung zwischen der IM-Kennung und der SMS-Kennung.

3. Verfahren nach Anspruch 1, wobei,
die SMS-Kennung ferner eine Kennung des rufenden Teilnehmers umfasst und der empfangene SMS-Statusbericht ferner eine Empfänger-Kennung des SMS-Statusberichts führt; und
das Abfragen der IM-Kennung, die der SMS-Kennung entspricht, basierend auf der hergestellten Zuordnungsbeziehung zwischen der IM-Kennung und der SMS-Kennung ferner Folgendes umfasst:
Bestimmen, ob die Nachrichtenempfänger-Kennung die Kennung des rufenden Teilnehmers in der SMS-Kennung ist, und wenn die Nachrichtenempfänger-Kennung die Kennung des rufenden Teilnehmers in der SMS-Kennung ist, bestimmt das IP-SM-GW ferner, ob der Zeitstempel des SMS-Statusberichts der gleiche ist wie der Zeitstempel in der SMS-Kennung, und wenn der Zeitstempel des SMS-Statusberichts der gleiche ist wie der Zeitstempel in der SMS-Kennung, fragt das IP-SM-GW die IM-Kennung, die der SMS-Kennung entspricht, basierend auf der hergestellten Zuordnungsbeziehung zwischen der IM-Kennung und der SMS-Kennung ab.

4. Verfahren nach Anspruch 2 oder 3, wobei
die Kennung des rufenden Teilnehmers in einem Kurznachrichtenweiterleitungsprotokoll-Ursprungsadressenfeld, SM-RP-OA-Feld, der SMS-Nachricht geführt ist.

5. Verfahren nach Anspruch 2 oder 3, wobei
die Empfänger-Kennung durch Informationen geführt ist, die in einem TP-Empfangsadressenfeld, TP-RA-Feld, des SMS-Statusberichts geführt sind oder in einem Kurznachrichtenweiterleitungsprotokoll-Zieladressenfeld, SM-RP-DA-Feld, geführt sind.

6. Verfahren nach Anspruch 1, wobei
die IM-Nachricht eine Sofortnachrichten-Dispositionsmeldung, IMDN, führt; und das Erzeugen der IM-Zustellungsstatusmeldungsnachricht, die die IM-Kennung führt, ferner Folgendes umfasst:
Erzeugen der IM-Zustellungsstatusmeldungsnachricht, die die IM-Kennung führt, in Übereinstimmung mit dem SMS-Statusbericht und der IMDN.

7. Verfahren nach Anspruch 1, wobei
dann, wenn die IM-Nachricht eine Trägerfähigkeit einer einzigen SMS-Nachricht überschreitet, das Umsetzen der IM-Nachricht in die SMS-Nachricht ferner Folgendes umfasst: Umsetzen der IM-Nachricht in mehrere Fragmente von SMS-Nachrichten; und
die SMS-Kennung eine SMS-Kennung jedes Fragments ist, die jedem Fragment der SMS-Nachricht entspricht.

8. Verfahren nach Anspruch 7, wobei das Erzeugen der IM-Zustellungsstatusmeldungsnachricht, die die IM-Kennung führt, ferner Folgendes umfasst:
Erzeugen der IM-Zustellungsstatusmeldungsnachricht, die die IM-Kennung führt, gemäß allen SMS-Statusberichten, die die SMS-Kennung jedes Fragments führen, das der IM-Kennung entspricht.

9. Netzelementvorrichtung, die Folgendes umfasst:
eine Sofortnachrichten-Empfangseinheit, IM-Empfangseinheit, (501), die konfiguriert ist, eine IM-Nachricht, die durch einen rufenden Teilnehmer gesendet wird und eine IM-Kennung führt, zu empfangen;
eine Kurznachrichtendienst-Nachrichtensendeeinheit, SMS-Nachrichtensendeeinheit, (502), die konfiguriert ist, die empfangene IM-Nachricht in eine SMS-Nachricht umzusetzen, um zu einem SMS-Dienstzentrum, SMS-SC, gesendet zu werden;
eine Zeitstempel-Empfangseinheit (503), die konfiguriert ist, einen Zeitstempel, der der SMS-Nachricht entspricht und der durch das SMS-SC gesendet wird, zu empfangen, wobei der Zeitstempel, der der SMS-Nachricht entspricht, eine Zeit ist, zu der das SMS-SC die SMS-Nachricht empfängt;
eine Zuordnungsbeziehungs-Herstellungseinheit (504), die konfiguriert ist, eine Zuordnungsbeziehung zwischen der IM-Kennung und einer SMS-Kennung, die der SMS-Nachricht entspricht, herzustellen, wobei die SMS-Kennung in der Zuordnungsbeziehungs-Herstellungseinheit (504) den Zeitstempel umfasst, der der SMS-Nachricht entspricht;
eine SMS-Statusbericht-Empfangseinheit (505), die konfiguriert ist, einen SMS-Statusbericht, der durch das SMS-SC gesendet wird und einen Zeitstempel führt, zu empfangen;
eine IM-Kennungs-Abfrageeinheit (506), die konfiguriert ist, die IM-Kennung, die der SMS-Kennung entspricht, die in dem SMS-Statusbericht geführt ist, basierend auf der hergestellten Zuordnungsbeziehung zwischen der IM-Kennung und der SMS-Kennung abzufragen, wenn der Zeitstempel des SMS-Statusberichts der gleiche ist wie der Zeitstempel in der SMS-Kennung; und
eine IM-Nachrichtenzustellungsstatus-Meldungseinheit (507), die konfiguriert ist, eine IM-Zustellungsstatusmeldungsnachricht, die die abgefragte IM-Kennung führt, zu erzeugen, um zu dem rufenden Teilnehmer gesendet zu werden.

10. Vorrichtung nach Anspruch 9, wobei
die SMS-Kennung in der Zuordnungsbeziehungs-Herstellungseinheit (504) ferner eine Kennung des rufenden Teilnehmers umfasst;
der SMS-Statusbericht, der durch die SMS-Statusbericht-Empfangseinheit (505) empfangen wird, ferner eine Empfänger-Kennung des SMS-Statusberichts führt,; und
die IM-Kennungs-Abfrageeinheit (506) ferner Folgendes umfasst:
eine Bestimmungseinheit (5061) für die Kennung des rufenden Teilnehmers, die konfiguriert ist zu bestimmen, ob die Empfänger-Kennung des SMS-Statusberichts die Kennung des rufenden Teilnehmers ist;
eine Zeitstempelbestimmungseinheit (5062), die konfiguriert ist zu bestimmen, ob der Zeitstempel, der in dem empfangenen SMS-Statusbericht geführt ist, der gleiche ist wie der Zeitstempel in der SMS-Kennung; und
eine Abfrageeinheit (5063), die konfiguriert ist, die IM-Kennung, die der SMS-Kennung entspricht, basierend auf der hergestellten Zuordnungsbeziehung zwischen der IM-Kennung und der SMS-Kennung abzufragen, wenn sowohl das Bestimmungsergebnis der Bestimmungseinheit (5061) für die Kennung des rufenden Teilnehmers als auch der Zeitstempelbestimmungseinheit (5062) "ja" ist.

11. Vorrichtung nach Anspruch 9, wobei:
die SMS-Kennung in der Zuordnungsbeziehungs-Herstellungseinheit (504) ferner eine Kennung des rufenden Teilnehmers umfasst;
der SMS-Statusbericht, der durch die SMS-Statusberichtsempfangseinheit (505) empfangen wird, ferner eine Empfänger-Kennung des SMS-Statusberichts führt; und die IM-Kennungsabfrageeinheit (506) ferner Folgendes umfasst:
eine Bestimmungseinheit (5061) für die Kennung des rufenden Teilnehmers, die konfiguriert ist zu bestimmen, ob die Empfänger-Kennung des SMS-Statusberichts die Kennung des rufenden Teilnehmers in der SMS-Kennung ist;
eine Zeitstempelbestimmungseinheit (5062), die konfiguriert ist zu bestimmen, ob der Zeitstempel, der in dem empfangenen SMS-Statusbericht geführt ist, der gleiche ist wie der Zeitstempel in der SMS-Kennung, wenn die Nachrichtenempfänger-Kennung die Kennung des rufenden Teilnehmers ist; und
eine Abfrageeinheit (5063), die konfiguriert ist, die IM-Kennung, die der SMS-Kennung entspricht, basierend auf der hergestellten Zuordnungsbeziehung zwischen der IM-Kennung und der SMS-Kennung abzufragen, wenn der Zeitstempel des SMS-Statusberichts der gleiche ist wie der Zeitstempel in der SMS-Kennung.

12. Netzsystem, das Folgendes umfasst: ein Internetprotokoll-Kurznachrichten-Gateway, IP-SM-GW, und ein Kurznachrichtendienst-Dienstzentrum, SMS-SC, wobei das IP-SM-GW konfiguriert ist, eine Sofortnachricht, IM, die durch einen rufenden Teilnehmer gesendet wird und eine IM-Kennung führt, zu empfangen, die IM-Nachricht in eine SMS-Nachricht umzusetzen, um zu dem SMS-SC gesendet zu werden, einen Zeitstempel zu empfangen, der der SMS-Nachricht entspricht und der durch das SMS-SC gesendet wird, und wobei der Zeitstempel, der der SMS-Nachricht entspricht, eine Zeit ist, zu der das SMS-SC die SMS-Nachricht empfängt, eine Zuordnungsbeziehung zwischen der IM-Kennung und einer SMS-Kennung, die der SMS-Nachricht entspricht, herzustellen, wobei die SMS-Kennung den Zeitstempel umfasst, der der SMS-Nachricht entspricht, einen SMS-Statusbericht, der durch das SMS-SC gesendet wird und einen Zeitstempel führt, zu erhalten, die IM-Kennung, die der SMS-Kennung entspricht, die in dem SMS-Statusbericht geführt ist, basierend auf der hergestellten Zuordnungsbeziehung zwischen der IM-Kennung und der SMS-Kennung abzufragen, wenn der Zeitstempel des SMS-Statusberichts der gleiche ist wie der Zeitstempel in der SMS-Kennung, und eine IM-Zustellungsstatusmeldungsnachricht zu erzeugen, die die abgefragte IM-Kennung führt, um zu dem rufenden Teilnehmer gesendet zu werden; und
das SMS-SC konfiguriert ist, die SMS-Nachricht zu empfangen, die durch das IP-SM-GW gesendet wird, und den SMS-Statusbericht, der die SMS-Kennung führt, zu dem IP-SM-GW zu senden.

## Revendications

1. Procédé pour la notification de l'état d'envoi de messages instantanés, comprenant :
la réception d'un message instantané, IM (Instant Message), qui est envoyé par un correspondant appelant et achemine un identifiant IM, et la transformation du message IM en un message de Service de Messages Courts, SMS (Short Message Service), et l'envoi du message SMS à un Centre de Service SMS, SMS-SC (SMS Service Center) ;
la réception d'un marqueur temporel du message SMS envoyé par le SMS-SC ;
l'établissement d'une relation de correspondance entre l'identifiant IM et un identifiant SMS correspondant au message SMS, l'identifiant SMS comprenant le marqueur temporel ;
la réception d'un rapport d'état SMS qui est envoyé par le SMS-SC et achemine un marqueur temporel ;
l'extraction de l'identifiant IM correspondant à l'identifiant SMS sur la base de la relation de correspondance établie entre l'identifiant IM et l'identifiant SMS, si le marqueur temporel du rapport d'état SMS est identique au marqueur temporel contenu dans l'identifiant SMS ;
et la génération d'un message de notification d'état de fourniture de l'IM acheminant l'identifiant IM devant être envoyé au correspondant appelant.

2. Procédé selon la revendication 1, dans lequel
l'identifiant SMS comprend en outre un identifiant du correspondant appelant, le rapport d'état SMS reçu acheminant en outre un identifiant du récepteur du rapport d'état SMS ; et
l'extraction de l'identifiant IM correspondant à l'identifiant SMS sur la base de la relation de correspondance établie entre l'identifiant IM et l'identifiant SMS comprend en outre :
la détermination du fait de savoir si l'identifiant du récepteur et le marqueur temporel du rapport d'état SMS sont respectivement identiques à l'identifiant du correspondant appelant et au marqueur temporel contenu dans l'identifiant SMS, et si l'identifiant du récepteur et le marqueur temporel du rapport d'état SMS sont respectivement identiques à l'identifiant du correspondant appelant et au marqueur temporel contenu dans l'identifiant SMS, l'extraction de l'identifiant IM correspondant à l'identifiant SMS sur la base de la relation de correspondance établie entre l'identifiant IM et l'identifiant SMS.

3. Procédé selon la revendication 1, dans lequel
l'identifiant SMS comprend en outre un identifiant de correspondant appelant, le rapport d'état SMS reçu acheminant en outre un identifiant du récepteur du rapport d'état SMS ; et
l'extraction de l'identifiant IM correspondant à l'identifiant SMS sur la base de la relation de correspondance établie entre l'identifiant IM et l'identifiant SMS comprend en outre :
la détermination du fait de savoir si l'identifiant du récepteur du message est l'identifiant du correspondant appelant contenu dans l'identifiant SMS, et si l'identifiant du récepteur du message est l'identifiant du correspondant appelant contenu dans l'identifiant SMS, la passerelle IP-SM-GW détermine en outre si le marqueur temporel du rapport d'état SMS est identique au marqueur temporel contenu dans l'identifiant SMS, et si le marqueur temporel du rapport d'état SMS est identique au marqueur temporel contenu dans l'identifiant SMS, la passerelle IP-SM-GW extrait l'identifiant IM correspondant à l'identifiant SMS sur la base de la relation de correspondance établie entre l'identifiant IM et l'identifiant SMS.

4. Procédé selon la revendication 2 ou 3, dans lequel
l'identifiant du correspondant appelant est acheminé dans un champ d'Adresse d'Origine de Protocole de Relais de Message Court, SM-RP-OA (Short Message Relay Protocol Origination Address), du message SMS.

5. Procédé selon la revendication 2 ou 3, dans lequel
l'identifiant du récepteur est acheminé par des informations acheminées dans un champ d'Adresse de Reçu TP, TP-RA (TP-Receipt Address), du rapport d'état SMS ou acheminées dans un champ d'Adresse de Destination de Protocole de Relais de Message Court, SM-RP-DA (Short Message Relay Protocol Destination Address).

6. Procédé selon la revendication 1, dans lequel
le message IM achemine une notification de mise à disposition de message instantané, IMDN (Instant Message Disposition Notification) ; et
la génération du message de notification d'état de fourniture de l'IM acheminant l'identifiant IM comprend en outre :
la génération du message de notification d'état de fourniture de l'IM acheminant l'identifiant IM conformément au rapport d'état SMS et à l'IMDN.

7. Procédé selon la revendication 1, dans lequel
lorsque le message IM dépasse une capacité de support d'un message SMS unique, la transformation du message IM en le message SMS comprend en outre : la transformation du message IM en une pluralité de fragments de messages SMS ; et l'identifiant SMS est un identifiant SMS de chaque fragment correspondant à chaque fragment du message SMS.

8. Procédé selon la revendication 7, dans lequel la génération du message de notification d'état de fourniture de l'IM acheminant l'identifiant IM comprend en outre :
la génération du message de notification d'état de fourniture de l'IM acheminant l'identifiant IM conformément à tous les rapports d'état SMS acheminant l'identifiant SMS de chaque fragment correspondant à l'identifiant IM.

9. Equipement d'élément de réseau, comprenant :
une unité (501) de réception de message instantané, IM (Instant Message), configurée pour recevoir un message IM qui est envoyé par un correspondant appelant et achemine un identifiant IM ;
une unité (502) d'envoi de message de Service de Messages Courts, SMS (Short Message Service), configurée pour transformer le message IM reçu en un message SMS devant être envoyé à un Centre de Service SMS, SMS-SC (SMS Service Centre) ;
une unité (503) de réception de marqueur temporel, configurée pour recevoir un marqueur temporel correspondant au message SMS envoyé par le SMS-SC, dans lequel le marqueur temporel correspondant au message SMS est un temps lors duquel le SMS-SC reçoit le message SMS ;
une unité (504) d'établissement de relation de correspondance, configurée pour établir une relation de correspondance entre l'identifiant IM et un identifiant SMS correspondant au message SMS, dans lequel l'identifiant SMS contenu dans l'unité (504) d'établissement de relation de correspondance comprend le marqueur temporel correspondant au message SMS ;
une unité (505) de réception de rapport d'état SMS, configurée pour recevoir un rapport d'état SMS qui est envoyé par le SMS-SC et achemine un marqueur temporel ;
une unité (506) d'extraction d'identifiant IM, configurée pour extraire l'identifiant IM correspondant à l'identifiant SMS acheminé dans le rapport d'état SMS sur la base de la relation de correspondance établie entre l'identifiant IM et l'identifiant SMS, si le marqueur temporel du rapport d'état SMS est identique au marqueur temporel contenu dans l'identifiant SMS ; et
une unité (507) de notification d'état de fourniture de message IM, configurée pour générer un message de notification d'état de fourniture de l'IM acheminant l'identifiant IM extrait devant être envoyé au correspondant appelant.

10. Equipement selon la revendication 9, dans lequel
l'identifiant SMS contenu dans l'unité (504) d'établissement de relation de correspondance comprend en outre un identifiant du correspondant appelant ;
le rapport d'état SMS reçu par l'unité (505) de réception de rapport d'état SMS achemine en outre un identifiant du récepteur du rapport d'état SMS ; et
l'unité (506) d'extraction d'identifiant IM comprend en outre :
une unité (5061) de détermination d'identifiant de correspondant appelant, configurée pour déterminer si l'identifiant du récepteur du rapport d'état SMS est l'identifiant du correspondant appelant ;
une unité (5062) de détermination de marqueur temporel, configurée pour déterminer si le marqueur temporel acheminé dans le rapport d'état SMS reçu est identique au marqueur temporel contenu dans l'identifiant SMS ; et
une unité d'extraction (5063), configurée pour extraire l'identifiant IM correspondant à l'identifiant SMS sur la base de la relation de correspondance établie entre l'identifiant IM et l'identifiant SMS, lorsque les résultats de détermination de l'unité (5061) de détermination d'identifiant de correspondant appelant et de l'unité (5062) de détermination de marqueur temporel sont tous deux "oui".

11. Equipement selon la revendication 9, dans lequel :
l'identifiant SMS contenu dans l'unité (504) d'établissement de relation de correspondance comprend en outre un identifiant du correspondant appelant ;
le rapport d'état SMS reçu par l'unité (505) de réception de rapport d'état SMS achemine en outre un identifiant du récepteur du rapport d'état SMS ; et
l'unité (506) d'extraction d'identifiant IM comprend en outre :
une unité (5061) de détermination d'identifiant de correspondant appelant configurée pour déterminer si l'identifiant du récepteur du rapport d'état SMS est l'identifiant du correspondant appelant contenu dans l'identifiant SMS ;
une unité (5062) de détermination de marqueur temporel, configurée pour déterminer si le marqueur temporel acheminé dans le rapport d'état SMS reçu est identique au marqueur temporel contenu dans l'identifiant SMS, si l'identifiant du récepteur du message est l'identifiant du correspondant appelant ; et
une unité d'extraction (5063), configurée pour extraire l'identifiant IM correspondant à l'identifiant SMS sur la base de la relation de correspondance établie entre l'identifiant IM et l'identifiant SMS, si le marqueur temporel du rapport d'état SMS est identique au marqueur temporel contenu dans l'identifiant SMS.

12. Système de réseau, comprenant : une Passerelle de Messages Courts à Protocole Internet, IP-SM-GW (Internet Protocol Short Message Gateway), et un Centre de Service de Service de Messages Courts, SMS-SC (Short Message Service-Service Centre), dans lequel
la passerelle IP-SM-GW est configurée pour recevoir un message instantané, IM, qui est envoyé par un correspondant appelant et achemine un identifiant IM, transformer le message IM en un message SMS devant être envoyé au SMS-SC, recevoir un marqueur temporel correspondant au message SMS envoyé par le SMS-SC, et le marqueur temporel correspondant au message SMS est un temps lors duquel le SMS-SC reçoit le message SMS, établir une relation de correspondance entre l'identifiant IM et l'identifiant SMS correspondant au message SMS, dans lequel l'identifiant SMS comprend le marqueur temporel correspondant au message SMS, obtenir un rapport d'état SMS qui est envoyé par le SMS-SC et achemine un marqueur temporel, extraire l'identifiant IM correspondant à l'identifiant SMS acheminé dans le rapport d'état SMS sur la base de la relation de correspondance établie entre l'identifiant IM et l'identifiant SMS, si le marqueur temporel du rapport d'état SMS est identique au marqueur temporel contenu dans l'identifiant SMS, et générer un message de notification d'état de fourniture de l'IM acheminant l'identifiant IM extrait devant être envoyé au correspondant appelant ; et
le SMS-SC est configuré pour recevoir le message SMS envoyé par la passerelle IP-SM-GW, et envoyer le rapport d'état SMS acheminant l'identifiant SMS à la passerelle IP-SM-GW.
